(19) 

Europäisches
Patentamt
European
Patent Office
Office européen
des brevets

(11) **EP 3 614 731 A1**

(12) **EUROPEAN PATENT APPLICATION**
published in accordance with Art. 153(4) EPC

(43) Date of publication:
**26.02.2020 Bulletin 2020/09**

(21) Application number: **17912275.9**

(22) Date of filing: **31.05.2017**

(51) Int Cl.:
**H04W 28/18** (2009.01)

(86) International application number:
**PCT/CN2017/086679**

(87) International publication number:
**WO 2018/218539 (06.12.2018 Gazette 2018/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **REN, Zhanyang
Shenzhen
Guangdong 518129 (CN)**

• **MA, Sha
Shenzhen
Guangdong 518129 (CN)**
• **HAN, Jinxia
Shenzhen
Guangdong 518129 (CN)**
• **LI, Zhenyu
Shenzhen
Guangdong 518129 (CN)**
• **ZHANG, Wurong
Shenzhen
Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR SCHEDULING SYSTEM INFORMATION BLOCK**

(57)     A method and an apparatus for scheduling a system information block are disclosed, to increase a probability of obtaining a system information block by a terminal. A network device sends a master information block to the terminal, where the master information block includes DMTC period information; and the terminal receives the master information block sent by the network device, and detects, at a location of a subframe in a DMTC period, a system information block sent by the network device. Alternatively, the master information block includes DMTC period information and DMTC time window information, and the terminal detects, at a location of a subframe in a DMTC period and in a DMTC window size, a system information block sent by the network device. Alternatively, the master information block includes system information block period information or MF system information block content change indication information, and the terminal determines, based on the system information block period information, whether content of the detected system information block is changed.

EP 3 614 731 A1

| Network device | Terminal |
|---|---|

S101: MIB-MF including DMTC period information

S102: MF system information block

S103: Determine a DMTC period by using the MIB-MF including the DMTC period information

S104: Detect, at a location of a subframe in the DMTC period, the MF system information block sent by the network device

FIG. 11

**Description**

**TECHNICAL FIELD**

This application relates to the field of communications technologies, and in particular, to a method and an apparatus for scheduling a system information block.

**BACKGROUND**

As communications services require low costs and low power consumption, require to be easy to deploy and maintenance-free, MF (MulteFire) communications systems deployed in unlicensed spectrums are more widely applied.

In an MF communications system, a terminal (for example, User Equipment (User Equipment, UE)) completes, by receiving a discovery signal (discovery signal, DRS) of a network device (for example, a base station), a communication procedure of accessing a network. The DRS in the MF communications system includes a synchronization signal used by the terminal to obtain a downlink synchronization signal and obtain a physical cell identifier (physical cell ID, PCI), and an MF system information block (System Information Block-MF1, SIB-MF1) used by the terminal to obtain an MF master information block (Master Information Block-MF, MIB -MF) and used by the terminal to obtain system information. The synchronization signal mainly includes a primary synchronization signal (primary synchronization signal, PSS), an MF primary synchronization signal (MF-primary synchronization signal, MF-PSS), a secondary synchronization signal (secondary synchronization signal, SSS), and an MF secondary synchronization signal (MF-secondary synchronization signal, MF-SSS). The MIB-MF mainly includes information such as a system bandwidth, a frame number, and a subframe offset, and is carried on an MF physical broadcast channel (physical broadcast channel, MF-PBCH). The MF system information block mainly includes a discovery signals measurement timing configuration (Discovery Signal Measurement Timing, DMTC) parameter, such as DMTC period information (dmtc-Periodicity-mf) indicating a DMTC period, DMTC window size information (dmtc-WindowSize-mf) indicating a DMTC window size, and DMTC offset information (dmtc-Offset-mf) indicating a subframe start location of a DMTC window in the DMTC period.

Usually, the network device can send a DRS to a plurality of terminals in only one subframe. The DRS is transmitted in one subframe, and occupies 12 or 14 orthogonal frequency division multiplexing (orthogonal frequency division multiplexing, OFDM) symbols. A PSS, an SSS, an MF-PSS, and an MF-SSS each occupy one symbol. In addition, an MF-PBCH occupies six orthogonal frequency division multiplexing (orthogonal frequency division multiplexing, OFDM) symbols. After receiving the DRS, the terminal parses the PSS, the MF-PSS, the SSS, and the MF-SSS to obtain a physical cell identifier, parses the MF-PBCH to obtain information such as a system bandwidth, completes clock and frequency synchronization with the network device, and further obtains an MF system information block and demodulates the MF system information block to obtain system information.

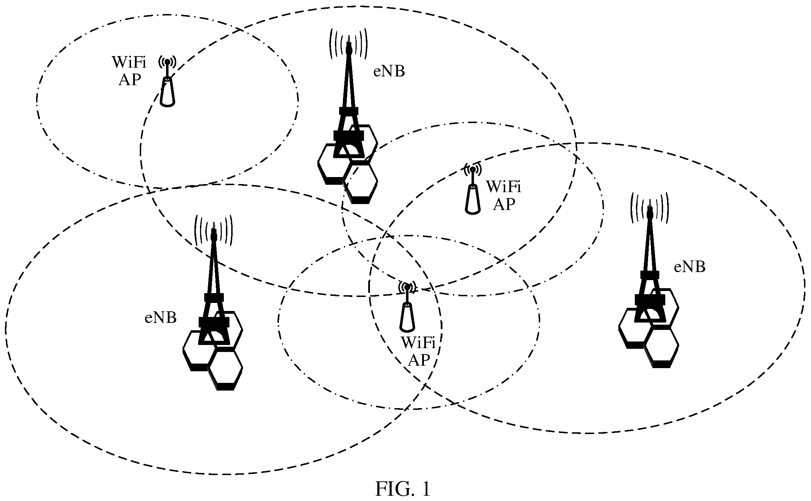

However, in the MF communications system, the terminal may be usually in a weak coverage scenario in which signal quality is relatively poor. For example, when the MF communications system is deployed in a scenario such as a harbor, a wharf, or an automated production flow, because the terminal generally has relatively high mobility, in a moving process of the terminal, a radio signal sent by the network device is easily blocked by various objects between the terminal and the network device. Consequently, quality of the radio signal is relatively poor, and the terminal may fail to normally receive the radio signal. For another example, because there is a relatively large quantity of terminals, in a moving process, the terminals may easily block radios signals, and consequently, the terminals may fail to normally receive data sent by the network device. Further, the MF communications system is a communications system deployed in an unlicensed spectrum, and there is a scenario in which the MF communications system coexists with another communications system. For example, in a scenario of FIG. 1 in which an MF communications system coexists with wireless fidelity (Wireless Fidelity, WiFi), and when there are a relatively large quantity of WiFi access points (WiFi Access Point, WiFi AP) and there is a relatively high communication requirement, interference between an evolved NodeB (eNB) in the MF communications system and a WiFi AP in the WiFi system is relatively serious, and a process of normally sending and receiving radio data between the terminal and the eNB is limited.

In the existing MF communications system, when the terminal is in the weak coverage scenario in which signal quality is relatively poor, if transmission of the DRS is completed in one subframe, the terminal may fail to normally receive the DRS, and in this case, the terminal cannot obtain an MF system information block, cannot obtain system information, and cannot access a network.

**SUMMARY**

Embodiments of this application provide a method and an apparatus for scheduling a system information block, to increase a probability of obtaining a system information block by a terminal.

According to a first aspect, a method for scheduling a system information block is provided. In the method, during scheduling of a system information block, a network device may send DMTC period information to a terminal before the terminal receives the system information block, so that the terminal can determine a DRS sending moment, detect the system information block at a subframe location corresponding to the DRS sending moment, and demodulate the system information block detected each time, to increase an opportunity of demodulating the system information block when channel quality is relatively good, and increase a probability of successfully demodulating the system information block.

In a possible design, the network device sends a master information block and a system information block to the terminal, and adds DMTC period information to the master information block, so that after receiving the master information block that is sent by the network device and that includes the DMTC period information, the terminal may determine a DMTC period by using the master information block including the DMTC period information. The terminal detects, at a location of a subframe in the DMTC period, the system information block sent by the network device, so that the terminal can determine a DRS sending moment, further detect the system information block at a subframe location corresponding to the DRS sending moment, and demodulate the system information block detected each time, to increase opportunities of demodulating the system information block when channel quality is relatively good, and increase a probability of successfully demodulating the system information block.

In another possible design, the master information block sent by the network device to the terminal may include DMTC period information and DMTC window size information, and after the terminal receives the master information block that is sent by the network device and that includes the DMTC period information and the DMTC window size information, the terminal may determine a DMTC period and a DMTC window size by using the master information block including the DMTC period information and the DMTC window size information. The terminal detects, at a location of a subframe in the DMTC period and in the DMTC window size, the system information block sent by the network device, to avoid that the terminal detects a system information block in a DRS at a location of a subframe that is in the DMTC period and in which no DRS is sent, thereby reducing, to some extent, power consumption of detecting a subframe by a terminal.

In still another possible design, the terminal may perform combined demodulation on system information blocks detected for a plurality of times. For example, the terminal detects a system information block sent by the network device, and performs combined demodulation on the detected system information block and another system information block. The another system information block is a system information block that is in received system information blocks and whose content is consistent with that of the detected system information block, before the terminal receives the detected system information block.

In still another possible design, in this embodiment of this application, a system information block period is set for a DRS, and content of system information blocks in a same system information block period is consistent. The master information block sent by the network device to the terminal includes system information block period information. After receiving the master information block including the system information block period information, the terminal determines a system information block period by using the master information block including the system information block period information, and then determines whether system information blocks for combined demodulation are system information blocks that are in a same system information block period and whose content is not changed. When it is determined that the system information blocks for combined demodulation are system information blocks that are in a same system information block period and whose content is not changed, combined demodulation is performed, thereby improving a success rate of the combined demodulation.

In still another possible design, in this embodiment of this application, system information block content change indication information is set for a DRS, and the system information block content change indication information is used to indicate whether content of the system information block currently sent by the network device is consistent with that of the system information block already sent by the network device. In this embodiment of this application, the master information block sent by the network device to the terminal includes the system information block content change indication information. After receiving the master information block including the system information block content change indication information, the terminal determines the system information block content change indication information by using the master system information block including the system information block content change indication information, and determines, based on the system information block content change indication information, whether the content of the detected system information block is changed, and further determines whether the content of the detected system information block is consistent with that of another system information block for combined demodulation with the detected system information block. When it is determined that the content of the detected system information block is consistent with that of the another system information block for combined demodulation with the detected system information block, combined demodulation is performed.

In this embodiment of this application, the master information block sent by the network device to the terminal includes system information block period information or a system information block content change indication, so that the terminal can determine whether the content of detected system information blocks is changed, and perform combined demodulation on the system information blocks when determining that the content of the detected system information blocks is not changed, to avoid a combined demodulation error of the terminal to some extent, and improve a success rate of demodulating the system information block by the terminal.

In still another possible design, the master information block sent by the network device to the terminal may include DMTC period information and system information block period information; include DMTC period information and system information block content change indication information; include DMTC period information, DMTC window size information, and system information block period information; or include DMTC period information, DMTC window size information, and system information block content change indication information.

In still another possible design, the DRS includes an existing PSS/SSS, and further includes an MF-PSS/MF-SSS, an MF-PBCH, a system information block, and the like. The MF-PSS/MF-SSS each occupies one symbol, and the MF-PBCH occupies six symbols.

In still another possible design, the DRS includes an existing PDCCH, a synchronization signal, and a PBCH, and further includes a newly added MF-ePSS, MF-eSSS, and MF-ePBCH.

The system information block in this embodiment of this application may be understood as a system information block in an MF system, namely, an MF system information block for short.

According to a second aspect, an apparatus for scheduling a system information block is provided. The apparatus for scheduling a system information block has the function of the terminal in the foregoing design, and the function may be implemented by hardware, or may be implemented by executing corresponding software by hardware. The hardware or the software includes one or more modules corresponding to the foregoing function. The module may be software and/or hardware.

In a possible design, the apparatus applied to scheduling a system information block includes a receiving unit and a processing unit, and functions of the receiving unit and the processing unit may correspond to the method steps. Details are not described herein again.

According to a third aspect, a terminal is provided. The terminal includes a processor, a transmitter, and a receiver, and may further include a memory. The memory is configured to be coupled to the processor, and the memory stores a program instruction and data that are necessary for the terminal. The processor executes the instruction stored in the memory, to perform the function of the terminal in any one of the first aspect and the possible designs of the first aspect.

In a possible design, the terminal may further include an antenna.

According to a fourth aspect, an apparatus for scheduling a system information block is provided. The apparatus for scheduling a system information block has the function of the network device in the foregoing design, and the function may be implemented by hardware, or may be implemented by hardware by executing corresponding software. The hardware or the software includes one or more modules corresponding to the foregoing function. The module may be software and/or hardware.

In a possible design, the apparatus applied to scheduling a system information block includes a processing unit and a sending unit, and functions performed by the sending unit under control of the processing unit may correspond to the method steps. Details are not described herein again.

According to a fifth aspect, a network device is provided. The network device includes a processor and a transceiver, and may further include a memory. The memory is configured to be coupled to the processor, and the memory stores a program instruction and data that are necessary for the network device. The processor, the transceiver, and the memory are connected. The memory is configured to store an instruction. The processor is configured to execute the instruction stored in the memory, to control the transceiver to receive and send a signal, and complete the steps performed by the network device in any one of the first aspect and the possible designs of the first aspect.

According to a sixth aspect, a communications system is provided. The communications system includes the network device in the fifth aspect and one or more terminals in the third aspect.

According to a seventh aspect, a computer storage medium is provided. The computer storage medium is configured to store some instructions. When the instructions are executed, any method related to the terminal or the network device in any one of the first aspect and the possible designs of the first aspect may be completed.

According to an eighth aspect, a computer program product is provided. The computer program product is configured to store a computer program. The computer program is used to complete any method related to the terminal or the network device in any one of the first aspect or the possible designs of the first aspect.

According to the method and the apparatus for scheduling a system information block provided in the embodiments of this application, a master information block includes at least a DMTC period, and may also include DMTC window size information, so that the terminal can obtain a DMTC configuration before demodulating a system information block. Therefore, the terminal only needs to detect a system information block in an enhanced DRS at a possible sending location of the enhanced DRS, thereby reducing power consumption of the terminal. The master information block includes system information block period information or a system information block content change indication, so that the terminal can determine whether content of the detected system information blocks is changed, and perform combined demodulation on the system information block when determining that the content of the detected system information blocks is not changed, to avoid a combined demodulation error of the terminal as much as possible, and improve a success rate of demodulating the system information block by the terminal.

## BRIEF DESCRIPTION OF DRAWINGS

FIG. 1 is a schematic diagram of a scenario in which an MF communications system coexists with WiFi;
FIG. 2 is a schematic diagram of a scenario of an MF communications system to which an embodiment of this application is applied;
FIG. 3 is a schematic diagram of an existing DRS format in an MF communications system;
FIG. 4 is a schematic diagram of an occasion for sending an existing DRS in an MF communications system;
FIG. 5 is a schematic diagram of an enhanced DRS format according to an embodiment of this application;
FIG. 6 is another schematic diagram of an enhanced DRS format according to an embodiment of this application;
FIG. 7 is still another schematic diagram of an enhanced DRS format according to an embodiment of this application;
FIG. 8 is still another schematic diagram of an enhanced DRS format according to an embodiment of this application;
FIG. 9 is still another schematic diagram of an enhanced DRS format according to an embodiment of this application;
FIG. 10 is still another schematic diagram of an enhanced DRS format according to an embodiment of this application;
FIG. 11 is a flowchart of an implementation method for scheduling an MF system information block according to an embodiment of this application;
FIG. 12 is a flowchart of another implementation method for scheduling an MF system information block according to an embodiment of this application;
FIG. 13 is a flowchart of another implementation method for scheduling an MF system information block according to an embodiment of this application;
FIG. 14 is a schematic diagram of a correspondence among a DMTC period, a DMTC window, and an MF system information block period according to an embodiment of this application;
FIG. 15 is a flowchart of another implementation method for scheduling an MF system information block according to an embodiment of this application;
FIG. 16 is a flowchart of another implementation method for scheduling an MF system information block according to an embodiment of this application;
FIG. 17 is a flowchart of another implementation method for scheduling an MF system information block according to an embodiment of this application;
FIG. 18 is a schematic structural diagram of an apparatus for scheduling an MF system information block according to an embodiment of this application;
FIG. 19 is another schematic structural diagram of an apparatus for scheduling an MF system information block according to an embodiment of this application;
FIG. 20 is a schematic structural diagram of another apparatus for scheduling an MF system information block according to an embodiment of this application; and
FIG. 21 is another schematic structural diagram of another apparatus for scheduling an MF system information block according to an embodiment of this application.

## DESCRIPTION OF EMBODIMENTS

The following describes the embodiments of this application with reference to the accompanying drawings.
Some terms in this application are first described, to help a person skilled in the art have a better understanding.

(1) A network device may be referred to as a radio access network (Radio Access Network) device, a device that connects a terminal to a radio network, and includes but is not limited to: an evolved NodeB (evolved Node B, eNB), a radio network controller (Radio Network Controller, RNC), a NodeB (Node B, NB), a base station controller (Base Station Controller, BSC), a base transceiver station (Base Transceiver Station, BTS), a home eNodeB (for example, a Home evolved NodeB, or a Home Node B, HNB), a baseband unit (BaseBand Unit, BBU), a wireless fidelity (Wireless Fidelity, WIFI) access point (Access Point, AP), and a transmission reception point (transmission and receiver point, TRP or transmission point, TP).
(2) A terminal is a device that provides voice and/or data connectivity to a user, and may include various handheld devices, vehicle-mounted devices, wearable devices, computing devices that have a wireless communication function, or another processing device connected to a wireless modem, and user equipment (User Equipment, UE), mobile stations (Mobile station, MS), terminal equipment (Terminal Equipment), and transmission reception points (transmission and receiver point, TRP or transmission point, TP) that are in various forms.

(3) Interaction in this application is a process in which two parties in the interaction transfer information to each other. The information transferred herein may be the same or different. For example, if the two parties in the interaction are a base station 1 and a base station 2, the base station 1 may request information from the base station 2, and the base station 2 provides the base station 1 with the information requested by the base station 1. Certainly, the base station 1 and the base station 2 may request information from each other, and the information requested herein may be the same or may be different.

(4) "A plurality of" refers to two or more than two. The term "and/or" describes an association relationship of associated objects and represents that three relationships may exist. For example, A and/or B may represent the following three cases: Only A exists, both A and B exist, and only B exists. The character "/" generally indicates an "or" relationship between the associated objects.

(5) A master information block, an MIB, an MF master information block, and an MIB-MF are of a same concept, and meanings represented by the master information block, the MIB, the MF master information block, and the MIB-MF are consistent when differences are not emphasized. A system information block, a SIB-MF1, and an MF system information block are also of a same concept, and meanings represented by the system information block, the SIB-MF1, and the MF system information block are consistent when differences are not emphasized.

The nouns "network" and "system" are usually interchangeably used, but meanings of the nouns can be understood by a person skilled in the art. "Information (information)", "signal (signal)", "message (message)", and "channel (channel)" may be interchangeably used sometimes. It should be noted that meanings expressed by the terms are consistent when differences are not emphasized. "Of (of)", "corresponding (corresponding, relevant)", "message (message)", and "corresponding (corresponding)" may be interchangeably used sometimes. It should be noted that meanings expressed by the terms are consistent when differences are not emphasized.

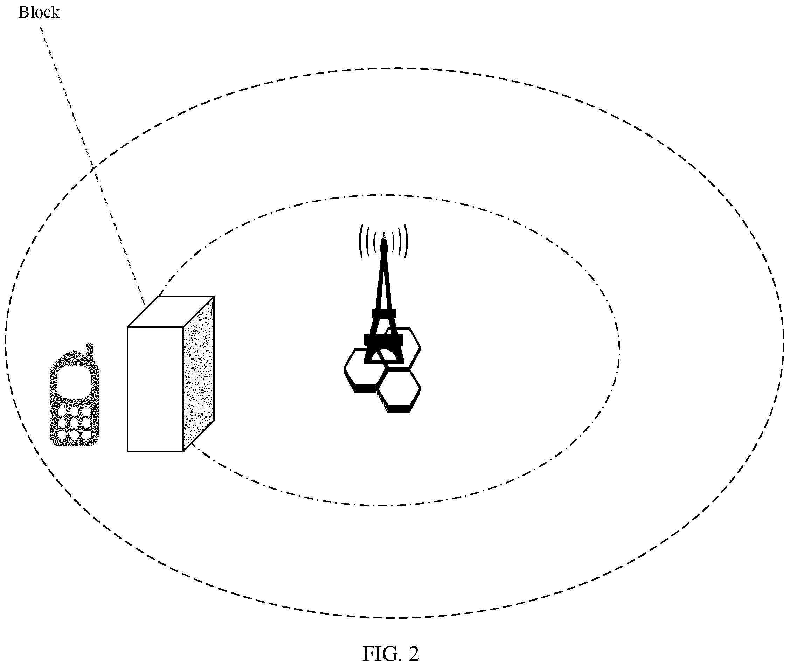

A method for scheduling an MF system information block according to the embodiments of this application may be applied to an MF communications system. The MF is a wireless communications system deployed in an unlicensed spectrum, and is applicable to an intelligent operation scenario in which an enterprise, a factory, a workshop, a warehouse, and the like are independently deployed. However, in these operation scenarios, due to mobility of a terminal, in a moving process of the terminal, a radio signal sent by a network device is easily blocked by various objects between the terminal and the network device. For example, as shown in FIG. 2, in this case, signal fading is severe, and consequently, quality of radio signals is relatively poor, and the terminal cannot normally receive a downlink signal sent by the network device. For example, the terminal cannot normally receive a DRS signal, and consequently, the terminal cannot access a network.

In the embodiments of this application, in face of the foregoing problems, downlink coverage of the MF system may be enhanced. For example, a DRS and an MF system information block are enhanced, so that the terminal normally accesses the network. In the embodiments of this application, a DRS signal in the MF communications system is mainly used as an example for description below.

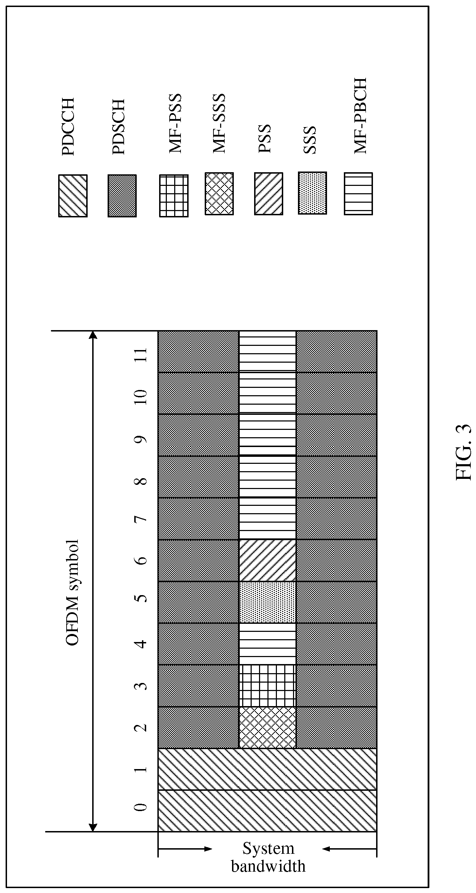

In the embodiments of this application, a format of the DRS sent in the MF communications system is first described. The DRS format in the MF communications system is shown in FIG. 3. In FIG. 3, a DRS in an MF communications system includes an existing PSS/SSS in long term evolution (Long Term Evolution, LTE), and further includes an MF-PSS/MF-SSS, an MF-PBCH, an MF system information block, and the like. The MF-PSS/MF-SSS each occupies one symbol, and the MF-PBCH occupies six symbols. A synchronization signal and a PBCH in the DRS in the communications system occupy six middle physical resource blocks (Physical Resource Block, PRB). In remaining PRBs, the network device adds scheduling information to a physical downlink control channel (Physical Downlink Control Channel, PDCCH), schedules an MF system information block, and adds content of the MF system information block to a physical downlink shared channel (Physical Downlink Shared Channel, PDSCH).

In the embodiments of this application, an occasion for sending the DRS in the MF communications system is described. In the MF communications system, the network device determines, by using DMTC configuration parameters such as dmtc-Periodicity-mf, dmtc-Offset-mf, and dmtc-WindowSize-mf, the occasion for sending the DRS. For example, the following manner may be used to determine the occasion for sending the DRS:

$$\text{SFN mod } T = \text{FLOOR}(\text{dmtc-Offset}/10);$$

$$\text{subframe} = \text{dmtc-Offset mod } 10;$$

with

$$T = \text{dmtc-Periodicity}/10.$$

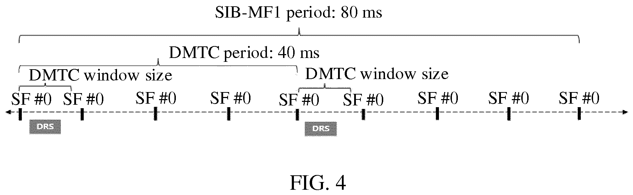

In the foregoing instruction for determining the occasion for sending the DRS, SFN (system frame Number) represents a system frame number, subframe represents a subframe number, T represents a DMTC sending period with a radio frame (radio frame) as a unit, mod represents a modulo operation, and FLOOR represents rounding down. Usually, in a configuration of a serving cell (serving cell), dmtc-Offset is 0 by default. For example, if dmtc-Periodicity-mf is configured to 40 ms, dmtc-Offset-mf configuration is configured to 0, and dmtc-WindowSize-mf is configured to 10 ms, a start location of the DMTC is a subframe 0, a period is 40 ms, a DMTC window size is 10 ms (that is, the subframe 0 to a subframe 9), and the occasion for sending the DRS is shown in FIG. 4.

In the MF communications system, before sending data, the network device may listen to a signal by using two categories of listen before talk (Listen-Before-Talk, LBT). For example, random backoff-based clear channel assessment and non-random backoff-based clear channel assessment may be specifically described by using Cat.4 LBT and Cat.2 LBT as an example. Cat. 2 LBT is a non-random backoff-based clear channel assessment (Clear Channel Assessment, CCA). For example, a channel may be listened to at a sending node, and if it is detected that the channel is idle within 25 $\mu$s, the sending node may immediately occupy the channel to send data. Cat. 4 LBT is a random backoff-based CCA in which required listening duration needs to be randomized, and may be: The sending node evenly and randomly generates a backoff counter N between 0 and a contention window size (Contention Window Size, CWS), and performs listening by using a listening slot (CCA slot) as a granularity. Within the listening slot, if it is detected that a channel is idle, the backoff counter is reduced by 1; or if it is detected that a channel is busy, the backoff counter is suspended, that is, the backoff counter N remains unchanged within a time during which the channel is busy, until it is detected that the channel is idle. When the backoff counter is reduced to 0, the sending node may immediately occupy the channel.

By using the foregoing configuration, the network device may perform Cat.2 LBT for channel listening, in the DMTC window (that is, the subframe 0 to the subframe 9) in 25 $\mu$s before the subframe 0 starts, and if detecting by listening that the channel remains in the idle state in 25 $\mu$s, the network device sends the DRS. If Cat.2 LBT fails, that is, if it is detected that the channel does not always remain in the idle state in 25 $\mu$s, the network device may continue to perform Cat.2 LBT for channel listening in 25 $\mu$s before a next subframe. If the network device sends the DRS after successfully performing Cat.2 LBT in a subframe, the network device no longer sends the DRS in remaining DMTC window.

In the embodiments of this application, to enhance a DRS, coverage of a downlink signal in the MF communications system is enlarged, so that when quality of a radio signal is relatively poor, the terminal can also correctly receive a DRS (for example, correctly receive an MF system information block), and can perform multi-subframe extension on the DRS in time domain. However, if a subframe length of a DRS in time domain exceeds a subframe length, the network device needs to perform Cat. 4 LBT for channel listening. In the embodiments of this application, to ensure that the DRS has more sending opportunities, a subframe length of an enhanced DRS in time domain should better not be greater than two subframes, so that the network device can perform priority 1 Cat.4 LBT for channel listening. A relatively short idle time of a channel is required, so that a transmission opportunity can be obtained more quickly, and timely sending of an enhanced DRS is ensured.

In the embodiments of this application, an example in which an enhanced DRS includes two subframes: a subframe n and a subframe n+1 in time domain is used for description.

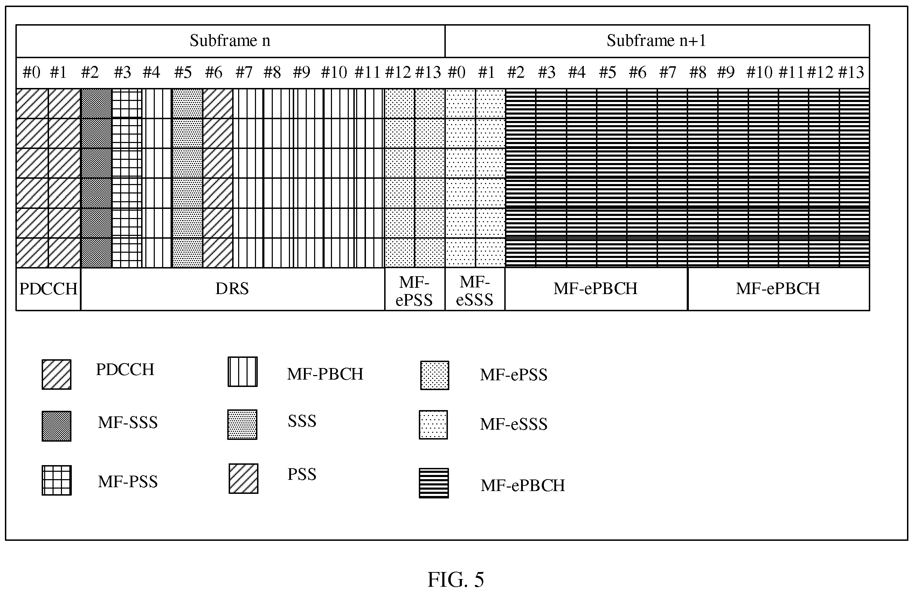

FIG. 5 is a schematic diagram of an enhanced DRS format according to an embodiment of this application. Referring to FIG. 5, the first 12 symbols of six middle resource blocks (Resource Block, RB) in a subframe n are existing PDCCHs, synchronization signals, and PBCHs, and the last two symbols are newly added PSSs. In this embodiment of this application, the newly added PSS is referred to as an MF-ePSS. The first two symbols in a subframe n+1 are newly-added SSSs, and the newly-added SSS is referred to as an MF-eSSS in this embodiment of this application. The MF-eSSS is the same as the MF-SSS/SSS, and may be combined with the MF-eSSS when the terminal detects a secondary synchronization sequence. The last 12 symbols in the subframe n+1 are newly-added PBCHs, and the newly-added PBCH is referred to as an MF-ePBCH in this embodiment of this application. That the MF-ePBCH occupies six consecutive symbols may also be understood as that the subframe n+1 includes two MF-ePBCHs.

**The MF-ePSS may be a ZC sequence whose root index is different from that of the PSS and the MF-PSS, and selection may be performed according to the following Table 1:**

| $N_{ID}^{(2)}$ | Root index | MF-PSS root index | MF-ePSS root index |
|---|---|---|---|
| 0 | 25 | 40 | 5 |
| 1 | 29 | 44 | 10 |
| 2 | 34 | 59 | 15 |

$N_{ID}^{(2)}$ represents a corresponding PCI in a PCI group. A value of the PCI ranges from 0 to 503, the range is divided into 168 PCI groups, and each PCI group includes three PCIs. That is, three PCIs included in one PCI group correspond to $N_{ID}^{(2)}$ values: 0, 1, and 2 respectively.

Further, to reduce cross-correlation between MF-ePSSs, two MF-ePSS symbols may be masked in time domain by using an orthogonal mask [- 1, 1] or [1,-1].

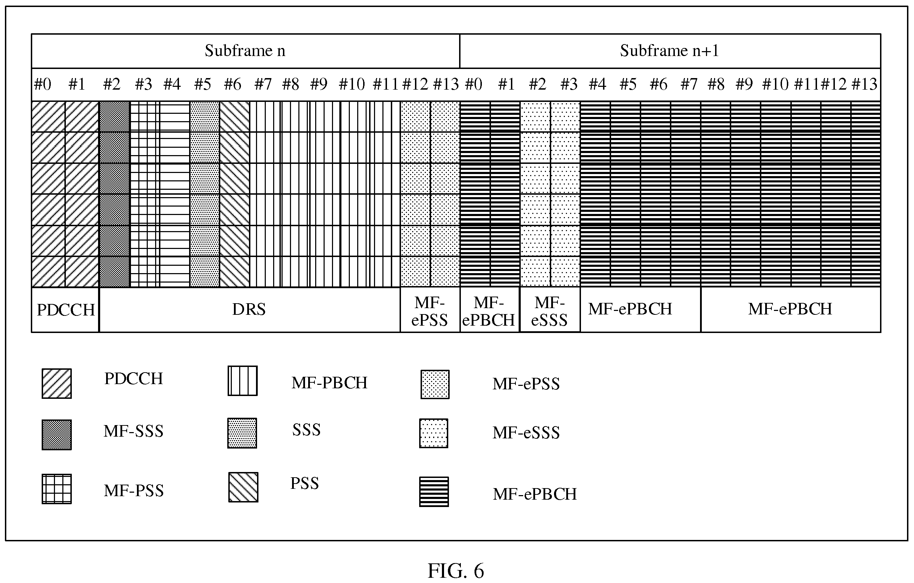

FIG. 6 is another schematic diagram of an enhanced DRS format according to an embodiment of this application. The enhanced DRS format shown in FIG. 6 is similar to the enhanced DRS format shown in FIG. 5. A difference lies in that a symbol 2 and a symbol 3 in the subframe n+1 are MF-eSSSs, a symbol 0, a symbol 1, a symbol 4, a symbol 5, a symbol 6, and a symbol 7 are MF-ePBCHs each including six symbols. With the enhanced DRS format shown in FIG. 6, a cell-specific pilot signal (Cell-specific reference signals, CRS) in the symbol 0 and the symbol 1 can be avoided.

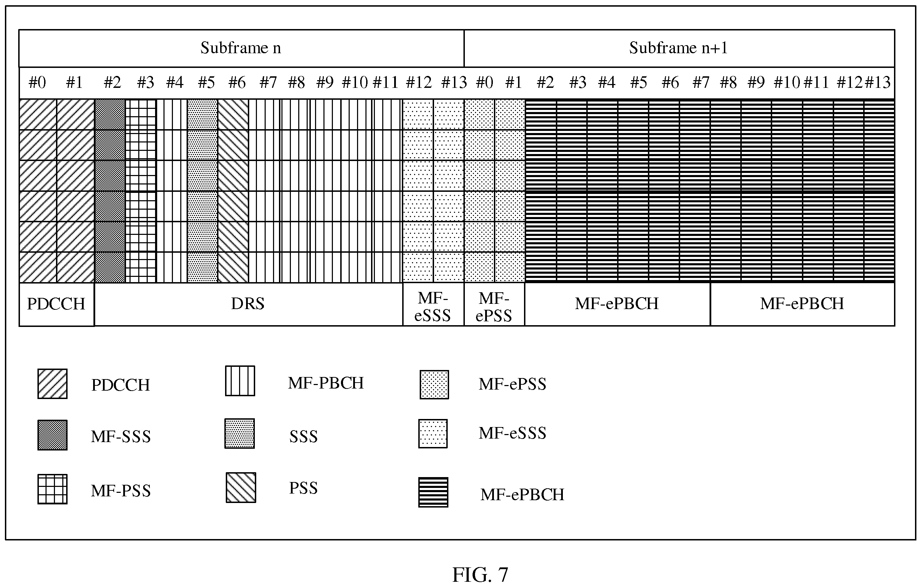

FIG. 7 is still another schematic diagram of an enhanced DRS format according to an embodiment of this application. The enhanced DRS format shown in FIG. 7 is similar to the enhanced DRS format shown in FIG. 5, and a difference lies in that locations of the MF-ePSSs and the MF-eSSSs are exchanged.

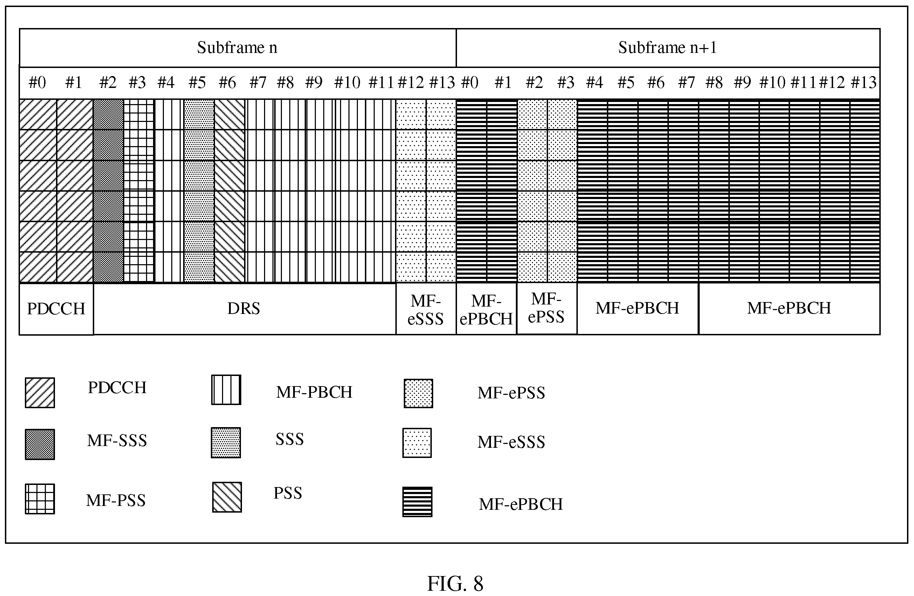

FIG. 8 is still another schematic diagram of an enhanced DRS format according to an embodiment of this application. The enhanced DRS format shown in FIG. 8 is similar to the enhanced DRS format shown in FIG. 6, and a difference lies in that locations of the MF-ePSSs and the MF-eSSSs are exchanged.

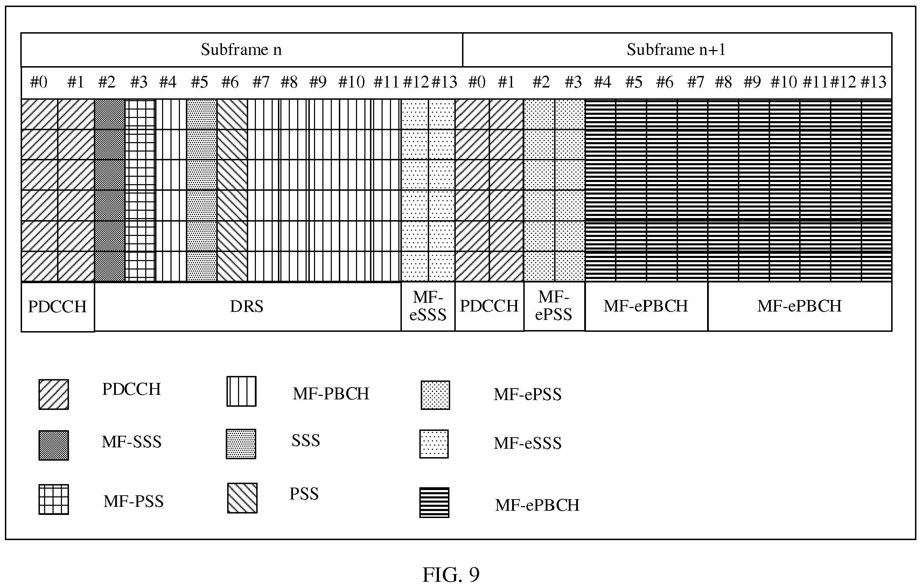

FIG. 9 is still another schematic diagram of an enhanced DRS format according to an embodiment of this application. Referring to FIG. 9, the first 12 symbols of the six middle RBs in a subframe n are existing PDCCHs, synchronization signal, and MF-PBCHs, and the last two symbols are MF-eSSSs. The MF-eSSS includes a base sequence and a scrambling code. The base sequence is an MF-SSS/SSS. There are five types of scrambling codes in total, and each scrambling code is in a one-to-one correspondence with a subframe offset (sf-offset). A length of the scrambling code is the same as that of the base sequence. A network device determines sf-offset based on a start subframe number of a DRS, and further selects a corresponding scrambling code. A base sequence is scrambled to generate an MF-eSSS, and MF-eSSSs in two symbols are the same. The first two symbols in a subframe n+1 are PDCCHs, two subsequent symbols are MF-ePSSs, and the last ten symbols are MF-ePBCHs, and included content, namely, MIB-MFs, are the same as the MF-PBCHs in the subframe n.

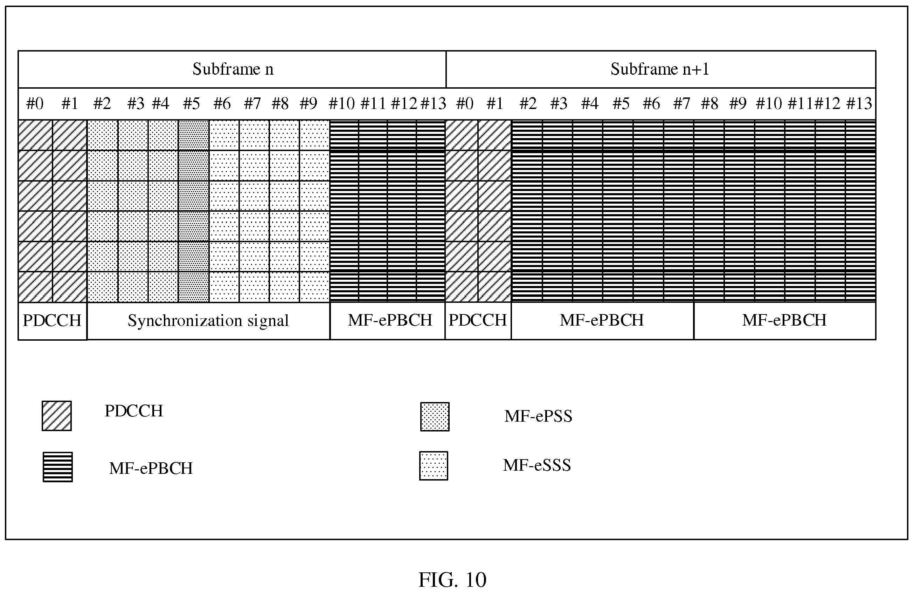

FIG. 10 is still another schematic diagram of an enhanced DRS format according to an embodiment of this application. Referring to FIG. 10, a symbol 2 to a symbol 5 in a subframe n are MF-ePSSs, a symbol 6 to a symbol 9 are MF-eSSSs, and a symbol 10 to a symbol 13 are MF-ePBCHs. In a subframe n+1, a symbol 2 to a symbol 7 are MF-ePBCHs, and the last six symbols are also MF-ePBCHs. The MF-eSSS may or may not be scrambled by using a scrambling code to indicate a subframe offset.

It should be noted that, in another enhanced DRS format, quantities of symbols and symbol locations occupied by the MF-ePSS, the MF-eSSS, and the MF-ePBCH in the subframe n may be different from the locations shown in FIG. 10, provided that the MF-ePSS, the MF-eSSS, and the MF-ePBCH are located in the subframe n.

In this embodiment of this application, when a DRS is sent in the foregoing enhanced DRS format, the enhanced DRS includes two subframes in time domain. In comparison with an existing DRS, synchronization signal-occupied resources are doubled, and physical broadcast channel resources are tripled. Therefore, when receiving an enhanced DRS, the terminal can detect and demodulate a synchronization signal and a physical broadcast channel by using more resources, and can correctly receive the synchronization signal and the physical broadcast channel even in a scenario in which radio channel quality is relatively poor. The network device may add an MF system information block to frequency domain resources other than the six middle RBs. For example, in this embodiment of this application, scheduling information of the MF system information block may be carried on a PDCCH/ePDCCH, and information bits are carried on a PDSCH.

In this embodiment of this application, the MF system information block includes necessary information of a SIB 1 and a SIB 2. A total quantity of bits is greater than 1000, and a relatively large quantity of resource carriers are required, to ensure relatively good coverage. Therefore, when the enhanced DRS includes two subframes in time domain, and remaining frequency domain resources in addition to the six middle RBs are used to carry load of the MF system information block, relatively high channel quality is required to ensure that the terminal normally demodulates the MF system information block. When the channel quality is relatively poor, for example, when a signal-to-noise ratio is below -10 dB, it is difficult for the terminal to normally demodulate the MF system information block.

Generally, the channel quality of the terminal fluctuates, and fluctuation of the channel quality may be understood as that, at a moment, the channel quality of the terminal is relatively good, and at another moment, the channel quality of the terminal is relatively poor. Therefore, when the channel quality is relatively poor, the terminal may not correctly demodulate the MF system information block from a received DRS. However, if the terminal receives a DRS at a moment of relatively good channel quality, the terminal may detect and demodulate the MF system information block. Therefore, in this embodiment of this application, when determining that the MF system information block is not correctly demodulated, the terminal may detect and demodulate the MF system information block at another moment. Detection and demodulation of the MF system information block for a plurality of times can increase opportunities of detection and demodulation by the terminal when the channel quality is relatively good. Therefore, a probability of successfully demodulating the MF system information block by the terminal can be increased.

In the embodiments of this application, the following describes the method for scheduling an MF system information block provided in the embodiments of this application by using an example in which the DRS is an enhanced DRS. It may be understood that, although the following embodiments of this application are described by using the enhanced DRS as an example, the method for scheduling an MF system information block in the following description is also applicable to an existing DRS. A specific execution manner is similar, and details are not described in this application.

In the embodiments of this application, to further improve the success rate of demodulating the MF system information block by the terminal, when the MF system information block is scheduled, the network device may send DMTC period information of the enhanced DRS to the terminal before the terminal receives the MF system information block, so that the terminal can determine an enhanced DRS sending moment, detect the MF system information block at a subframe location corresponding to the enhanced DRS sending moment, and demodulate the MF system information block detected each time, to increase opportunities of demodulating the MF system information block when the channel quality is relatively good, and increase a probability of successfully demodulating the MF system information block.

In the embodiments of this application, when a DRS is sent in the foregoing enhanced DRS format, compared with a probability of detecting and successfully demodulating an MF system information block, a probability that the terminal normally detects and successfully demodulates an MIB-MF is relatively high. Therefore, in the embodiments of this application, the MIB-MF may include DMTC period information, so that after receiving the MIB-MF that is sent by the network device and that includes the DMTC period information, the terminal may determine a DMTC period by using the MIB-MF including the DMTC period information. For example, the terminal obtains the DMTC period by demodulating the MIB-MF including the DMTC period information. The terminal detects, at a location of a subframe in the DMTC period, an MF system information block sent by the network device, so that the terminal can determine an enhanced DRS sending moment, detect the MF system information block at a corresponding subframe location corresponding to the enhanced DRS sending moment, and demodulate the MF system information block detected each time, to increase opportunities of demodulating the MF system information block when channel quality is desirable, and increase a probability of successfully demodulating the MF system information block.

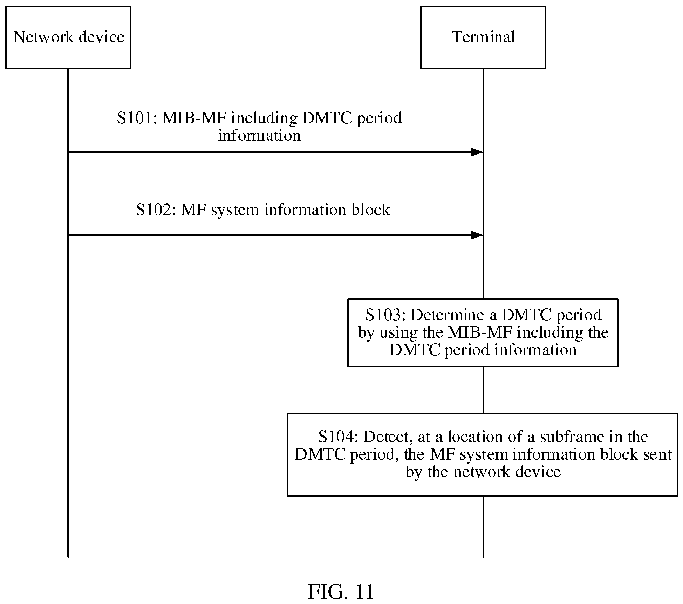

FIG. 11 is a flowchart of an implementation method for scheduling an MF system information block according to an embodiment of this application. As shown in FIG. 11, the method includes the following steps.

S101: A network device sends an MIB-MF to a terminal, and the terminal receives the MIB-MF sent by the network device, where the MIB-MF includes DMTC period information.

The DMTC period information included in the MIB-MF may be understood as DMTC period information of an enhanced DRS.

S102: The network device sends an MF system information block to the terminal, and the terminal receives the MF system information block sent by the network device.

In this embodiment of this application, the MF system information block includes DMTC configuration information, and the DMTC configuration information may be understood as DMTC configuration information of a currently existing DRS.

It may be understood that, if the method for scheduling an MF system information block provided in this embodiment of this application is applied to the existing DRS, the DMTC period information included in the MIB-MF may be consistent with DMTC period information in the DMTC configuration information included in the MF system information block.

S103: The terminal determines a DMTC period by using the MIB-MF including the DMTC period information.

The terminal may demodulate the MIB-MF including the DMTC period information, to obtain the DMTC period.

S104: The terminal detects, at a location of a subframe in the DMTC period, the MF system information block sent by the network device.

In the current MIB-MF, there are remaining spare bits in addition to bits including information such as system bandwidth, a frame number, and a subframe offset. Therefore, in this embodiment of this application, the remaining spare bits in the MIB-MF may be used to carry the DMTC period information.

For example, in this embodiment of this application, two bits in the MIB-MF may be occupied to carry the DMTC period information. A specific signaling configuration may be as follows:

```
MasterInformationBlock-MF ::= SEQUENCE {
  dl-Bandwidth-mf ENUMERATED {
     n50, n100, spare1, spare2, spare3, spare4, spare5, spare6
                            },
  systemFrameNumber-mf BIT STRING (SIZE (8)),
   sf-Offset-mf INTEGER (0..4),
```

```
dmtc-Periodicity-mf ENUMERATED {ms40, ms80,
ms160},
    spare BIT STRING (SIZE (8))
}
```

In the signaling configuration above, MasterInformationBlock-MF represents an MIB-MF, dl-Bandwidth-mf represents transmission bandwidth information, systemFrameNumber-mf represents information about first eight bits of a system frame number (where the system frame number has a total of ten bits, and the remaining two bits are carried in a scrambling code of an MF-PBCH), sf-Offset-mf represents subframe offset information, dmtc-Periodicity-mf represents DMTC period information, and spare represents remaining bits.

In this embodiment of this application, two bits in the MIB-MF are used to carry the DMTC period information. If a relatively small quantity of bits in the MIB-MF are occupied to carry the DMTC period information, when the DMTC period arrives, the terminal detects, at the location of the subframe in the DMTC period, the MF system information block sent by the network device. For example, if the DMTC period is 40 ms, the terminal may detect the MF system information block in the enhanced DRS at corresponding locations of a subframe 0 to a subframe 9 starting from a radio frame satisfying SFN mod 4 = 0.

The network device may not send the enhanced DRS in each subframe in the entire DMTC period, but sends the enhanced DRS in a DMTC window. In this case, the MF system information block in this embodiment of this application may further include DMTC window size information. The terminal demodulates the master information block including the DMTC window size information to obtain a DMTC window size, and detects, at a location of a subframe in the DMTC period and in the DMTC window size, the MF system information block sent by the network device, to avoid that the terminal detects the MF system information block in a subframe that is in the DMTC period and in which no enhanced DRS is sent, thereby reducing, to some extent, power consumption of detection by the terminal in subframes.

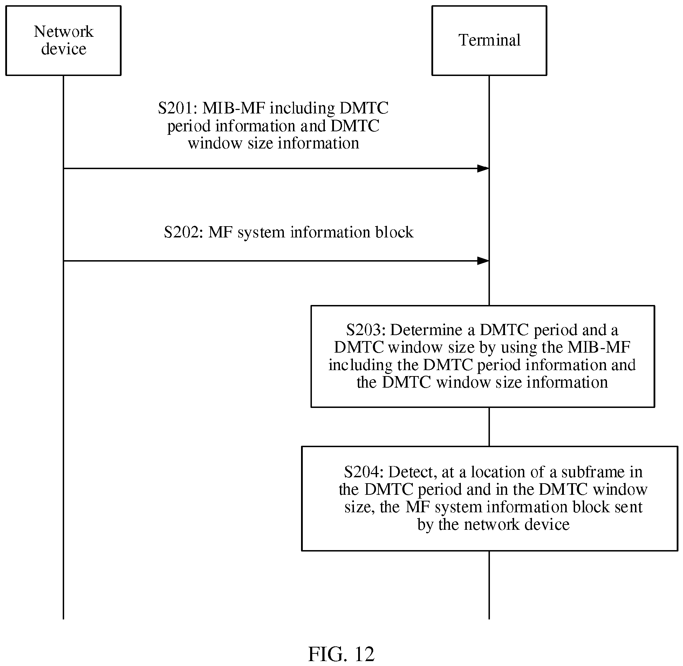

FIG. 12 is a flowchart of another implementation method for scheduling an MF system information block according to an embodiment of this application. As shown in FIG. 12, the method includes the following steps.

S201: A network device sends an MIB-MF to a terminal, and the terminal receives the MIB-MF sent by the network device, where the MIB-MF includes DMTC period information and DMTC window size information.

The DMTC period information and the DMTC window size information included in the MIB-MF may be understood as DMTC period information and DMTC window size information of an enhanced DRS.

S202: The network device sends an MF system information block to the terminal, and the terminal receives the MF system information block sent by the network device.

In this embodiment of this application, the MF system information block includes DMTC configuration information, and the DMTC configuration information may be understood as DMTC configuration information of a currently existing DRS.

It may be understood that, if the method for scheduling an MF system information block provided in this embodiment of this application is applied to the existing DRS, the DMTC period information and the DMTC window size information included in the MIB-MF may be consistent with DMTC period information and DMTC window size information in the DMTC configuration information included in the MF system information block.

S203: The terminal determines a DMTC period and a DMTC window size by using the MIB-MF including the DMTC period information and the DMTC window size information.

The terminal may obtain the DMTC period and the DMTC window size by demodulating the MIB-MF including the DMTC period information and the DMTC window size information.

S204: The terminal detects, at a location of a subframe in the DMTC period and in the DMTC window size, the MF system information block sent by the network device.

In this embodiment of this application, a spare bit in the MIB-MF may be used to carry the DMTC period information and the DMTC window size information. The DMTC period information and the DMTC window size information may be jointly coded or may be independently coded.

For example, in this embodiment of this application, five bits in the MIB-MF may be occupied to jointly code the DMTC period information and the DMTC window size information. A specific signaling configuration may be as follows:

```
MasterInformationBlock-MF ::= SEQUENCE {
  dl-Bandwidth-mf ENUMERATED {
      n50, n100, spare1, spare2, spare3, spare4, spare5, spare6
                          },
  systemFrameNumber-mf BIT STRING (SIZE (8)),
   sf-Offset-mf INTEGER (0..4),
DMTC-mf BIT STRING (SIZE (5))
    spare BIT STRING (SIZE (5))
}
```

DMTC-mf represents joint coding information of the DMTC period information and the DMTC window size information, and occupies five bits in total.

In this embodiment of this application, the DMTC period information and the DMTC window size information may alternatively be separately coded.

For example, in this embodiment of this application, two bits in the MIB-MF may be occupied to code the DMTC period information, and four bits in the MIB-MF are used to code the DMTC window size information. A specific signaling configuration may be as follows:

```
MasterInformationBlock-MF ::= SEQUENCE {
  dl-Bandwidth-mf ENUMERATED {
     n50, n100, spare1, spare2, spare3, spare4, spare5, spare6
                          },
  systemFrameNumber-mf BIT STRING (SIZE (8)),
   sf-Offset-mf INTEGER (0..4),
  dmtc-Periodicity-mf ENUMERATED {ms40, ms80,
  ms160},
  dmtc-WindowSizw-mf INTEGER (1..10),
    spare BIT STRING (SIZE (4))
  }
```

dmtc-Periodicity-mf represents the DMTC period information, and dmtc-WindowSizw-mf represents the DMTC window size information.

**A mapping rule shown in Table 2 below may be used for specific mapping between the DMTC period information and the DMTC window size information:**

| Bits | DMTC period information | DMTC window size information |
| --- | --- | --- |
| 00000-01001 | 40 ms | 1-10 ms |
| 01010-10011 | 80 ms | 1-10 ms |
| 10100-11101 | 160 ms | 1-10 ms |
| 11110-11111 | Reserved | Reserved |

In this embodiment of this application, different value ranges may be set for the DMTC period and the DMTC window size in the DMTC configuration information. For example, a value of the DMTC period may be configured to 80 ms or 160 ms. A value range of a DMTC time window may be one or more of the following: 1 to 9 ms, 1 to 11 ms, 1 to 12 ms, 1 to 39 ms, and 1 to 40 ms.

In this embodiment of this application, when the DMTC period and the DMTC window size use different values, quantities of bits occupied in the MIB-MF are also different. For example, when the DMTC period has three values: 40 ms, 80 ms, and 160 ms, and the DMTC window size is 1 to 40 ms, and seven bits are required to jointly code the DMTC period information and the DMTC window size information. A specific signaling configuration of the MIB-MF may be as follows:

```
MasterInformationBlock-MF ::= SEQUENCE {
  dl-Bandwidth-mf ENUMERATED {
     n50, n100, spare1, spare2, spare3, spare4, spare5, spare6
                          },
  systemFrameNumber-mf BIT STRING (SIZE (8)),
   sf-Offset-mf INTEGER (0..4),
  DMTC-mf BIT STRING (SIZE (7))
    spare BIT STRING (SIZE (3))
  }
```

For example, when the DMTC period has three values: 40 ms, 80 ms, and 160 ms, and the DMTC window size is 1 to 40 ms, two bits and six bits are required respectively to separately code the DMTC period information and the DMTC window size information. A specific signaling configuration of the MIB-MF may be as follows:

```
MasterInformationBlock-MF ::= SEQUENCE {
  dl-Bandwidth-mf ENUMERATED {
```

```
        n50, n100, spare1, spare2, spare3, spare4, spare5, spare6
                                },
     systemFrameNumber-mf BIT STRING (SIZE (8)),
      sf-Offset-mf INTEGER (0..4),
     dmtc-Periodicity-mf ENUMERATED {ms40, ms80,
     ms160},
     dmtc-WindowSizw-mf INTEGER (1..40),
        spare BIT STRING (SIZE (2))
     }
```

According to the foregoing configuration, the terminal can obtain all information of a DMTC configuration by using an MF-PBCH, and only needs to perform detection by using a synchronization sequence in a DMTC window, or perform CRS detection based on a PCI and a subframe number to detect an MF system information block in an enhanced DRS, without a need of detecting a DRS in each subframe. Therefore, power consumption of the terminal is reduced. Further, in this embodiment of this application, only a spare bit in the MIB-MF is used to carry the DMTC configuration information, the network device only needs to set a corresponding bit value in a corresponding field based on the DMTC configuration, and the terminal can obtain the corresponding DMTC configuration information only by, for example, demodulating the MIB-MF. Implementation is simple, and backward compatibility is met, and a terminal that can demodulate only a DRS but cannot demodulate an enhanced DRS is not affected.

In this embodiment of this application, after detecting MF system information blocks for a plurality of times in the foregoing manner, the terminal can demodulate the detected MF system information blocks. Specifically, in a demodulation process, combined demodulation may be performed on the MF system information blocks detected for the plurality of times. Certainly, demodulation may be performed separately. This is not limited in this embodiment of this application.

In this embodiment of this application, an implementation process in which the terminal performs combined demodulation on MF system information blocks detected for a plurality of times is described below.

In this embodiment of this application, if content of the MF system information blocks sent by the network device for a plurality of times is changed, the terminal performs combined demodulation on the MF system information blocks detected for the plurality of times, but demodulation may fail. In this embodiment of this application, an MF system information block period may be set for the enhanced DRS, and content of MF system information blocks in a same MF system information block period is consistent. An MIB-MF sent by the network device to the terminal carries MF system information block period information. After receiving the MIB-MF including the MF system information block period information, the terminal can determine the MF system information block period by using the MIB-MF including the MF system information block period information, and then determine whether MF system information blocks for combined demodulation are MF system information blocks that are in a same MF system information block period and whose content is not changed.

In this embodiment of this application, MF system information block content change indication information may be further set for the enhanced DRS, and the MF system information block content change indication information is used to indicate whether content of an MF system information block currently sent by the network device is consistent with that of the MF system information block already sent by the network device. In this embodiment of this application, the MIB-MF sent by the network device to the terminal includes the MF system information block content change indication information. After receiving the MIB-MF including the MF system information block content change indication information, the terminal can determine the MF system information block content change indication information by using the master system information block including the MF system information block content change indication information, determine, based on the MF system information block content change indication information, whether the content of the detected MF system information block is changed, and further determine whether the content of the detected MF system information block is consistent with that of another system information block for combined demodulation with the detected MF system information block.

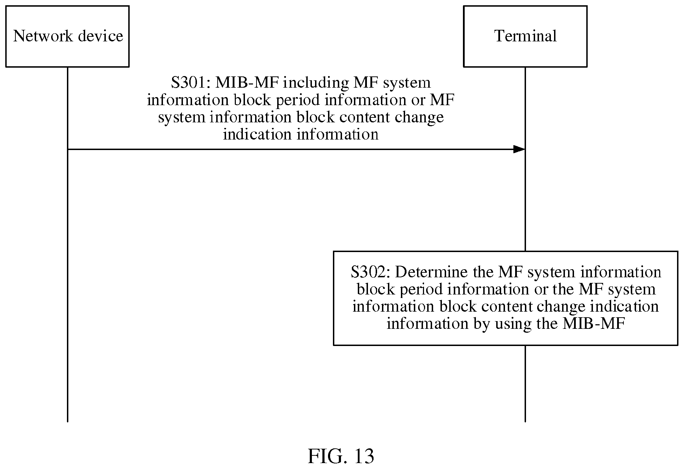

FIG. 13 is a flowchart of another implementation method for scheduling an MF system information block according to an embodiment of this application. As shown in FIG. 13, the method includes the following steps.

S301: A network device sends an MIB-MF to a terminal, where the MIB-MF includes MF system information block period information or MF system information block content change indication information.

S302: The terminal receives the MIB-MF sent by the network device, and determines, by using the MIB-MF including the MF system information block period information or the MF system information block content change indication information, whether content of a detected MF system information block is consistent with that of another system information block for combined demodulation with the detected MF system information block.

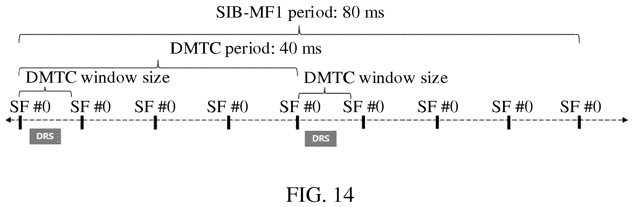

In this embodiment of this application, the MF system information block period information may be understood as an MF system information block period parameter, and the period parameter may be represented in a plurality of manners. For example, in this embodiment of this application, the MF system information block period parameter may be represented as a multiple of a DMTC period. That is, a calculation manner of an MF system information block period may be expressed as: a product of the DMTC period and the MF system information block period parameter. Assuming that a subframe start location is a subframe 0, a calculation formula of a radio frame start location is: SFN mod T = 0. A calculation formula of a radio frame period is: T = dmtc-Periodicity* SIB-MF1-Periodicity-mf /10. T is the radio frame period, dmtc-Periodicity is the DMTC period, and SIB-MF1-Periodicity-mf is the MF system information block period information. A correspondence among the DMTC period, a DMTC window, and the MF system information block period (a SIB-MF1 period) may be shown in FIG. 14. In FIG. 14, if the DMTC period is 40 ms, and the MF system information block period parameter is 2, the MF system information block period is 80 ms.

In this embodiment of this application, a period configuration of the MF system information block is similar to the foregoing configuration of the DMTC period, and may use difference values. The MF system information block and the DMTC period may be configured in a combined manner or separately, and examples are not enumerated.

In this embodiment of this application, the MF system information block content change indication information is used to indicate whether content of the MF system information block is changed, and one bit may be used for representation. For example, when one bit is set to 1, it may indicate that content of an MF system information block sent by the network device this time is inconsistent with content of an MF system information block sent last time. When one bit is set to 0, it may indicate that content of an MF system information block sent by the network device this time is consistent with content of an MF system information block sent last time.

In this embodiment of this application, a spare bit in the MIB-MF may be occupied to code the configured MF system information block period information, and a specific signaling configuration in which the spare bits in the MIB-MF is used to code the MF system information block period information may be as follows:

```
MasterInformationBlock-MF ::= SEQUENCE {
  dl-Bandwidth-mf ENUMERATED {
     n50, n100, spare1, spare2, spare3, spare4, spare5, spare6
                            },
  systemFrameNumber-mf BIT STRING (SIZE (8)),
   sf-Offset-mf INTEGER (0..4),
  SIB-MF1-Periodicity-mf ENUMERATED
  {80ms,160ms,320ms},
    spare BIT STRING (SIZE (8))
}
```

In the foregoing signaling configuration, SIB-MF1-Periodicity-mf represents the MF system information block period information, and represents a specific value of the MF system information block period.

In this embodiment of this application, the MF system information block content change indication information may be implemented by occupying a spare bit in the MIB-MF for coding, and a specific signaling configuration in which the spare bit in the MIB-MF is used to code the MF system information block content change indication information may be as follows:

```
MasterInformationBlock-MF ::= SEQUENCE {
  dl-Bandwidth-mf ENUMERATED {
     n50, n100, spare1, spare2, spare3, spare4, spare5, spare6
                            },
  systemFrameNumber-mf BIT STRING (SIZE (8)),
   sf-Offset-mf INTEGER (0..4),
  SIB-MF1-ChangeInd-mf ENUMERATED {0,1},
    spare BIT STRING (SIZE (9))
}
```

In the foregoing signaling configuration, SIB-MF1-ChangeInd-mf represents the MF system information block content change indication information.

If an MIB-MF includes MF system information block period information, the terminal may determine an MF system information block period by using the MIB-MF including the MF system information block period information. For example, the terminal may obtain the MF system information block period by demodulating the MIB-MF including the MF system information block period information. If the MIB-MF includes MF system information block content change indication information, the terminal may determine an MF system information block content change indication by using the MIB-MF including the MF system information block content change indication information. For example, the terminal may obtain the MF system information block content change indication by demodulating the MIB-MF including the MF system information block content change indication information.

In this embodiment of this application, after the terminal determines the MF system information block period or the MF system information block content change indication by using the MIB-MF including the MF system information block period or the MF system information block content change indication, the terminal may further determine whether to perform combined demodulation on an MF system information block detected this time and another MF system information block received previously, to improve a demodulation success ratio.

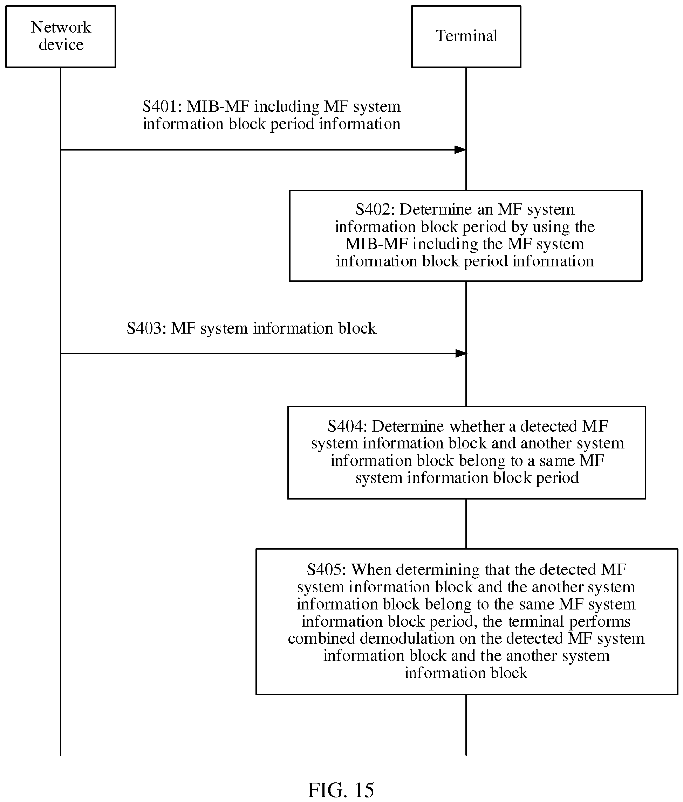

FIG. 15 is a flowchart of another implementation method for scheduling an MF system information block according to an embodiment of this application. As shown in FIG. 15, the method includes the following steps.

S401: A network device sends an MIB-MF to a terminal, where the MIB-MF includes MF system information block period information.

S402: The terminal receives the MIB-MF sent by the network device, and determines an MF system information block period by using the MIB-MF including the MF system information block period information.

S403: The network device sends an MF system information block, and the terminal detects the MF system information block sent by the network device.

S404: The terminal determines, based on the MF system information block period, whether the detected MF system information block and another system information block belong to a same MF system information block period.

In this embodiment of the present application, the another MF system information block may be understood as a system information block that is in received MF system information blocks and whose content is consistent with that of the detected MF system information block, before the terminal receives the detected MF system information block, and may also be understood as an MF system information block, where combined demodulation is to be performed by the terminal on the MF system information block and the MF system information block detected this time.

In this embodiment of this application, the terminal may buffer an MF system information block that is detected each time but fails to be demodulated, and perform combined demodulation on the buffered MF system information block and the MF system information block detected this time. However, before the combined demodulation is performed, it needs to determine whether content of the buffered MF system information block is consistent with that of the currently detected MF system information block. Combined demodulation is performed only when the content is consistent. When the content is inconsistent, the buffered MF system information blocks with inconsistent content may be discarded. Therefore, in this embodiment of this application, the another MF system information block for combined demodulation with the MF system information block detected this time may be an MF system information block specified in MF system information blocks that are not successfully demodulated before the terminal demodulates the detected MF system information block. The specified MF system information block is a system information block whose content is consistent with that of the currently detected MF system information block.

S405: The terminal performs combined demodulation on the detected MF system information block and the another system information block.

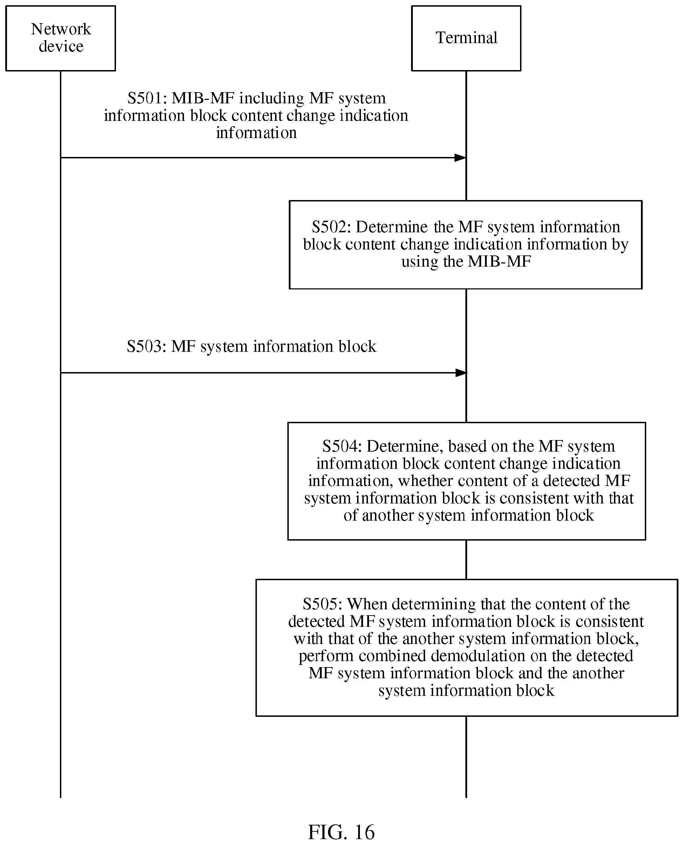

FIG. 16 is a flowchart of another implementation method for scheduling an MF system information block according to an embodiment of this application. As shown in FIG. 16, the method includes the following steps.

S501: A network device sends an MIB-MF to a terminal, where the MIB-MF includes MF system information block content change indication information.

S502: The terminal receives the MIB-MF sent by the network device, and determines the MF system information block content change indication information by using the MIB-MF including the MF system information block content change indication information.

S503: The network device sends an MF system information block, and the terminal detects the MF system information block sent by the network device.

S504: The terminal determines, based on the MF system information block content change indication information, whether content of the detected MF system information block is consistent with that of another system information block.

S505: When determining that the content of the detected MF system information block is consistent with that of the another system information block, the terminal performs combined demodulation on the detected MF system information block and the another system information block.

In the foregoing embodiment of this application, the MIB-MF includes MF system information block period information or the MF system information block content change indication information, and a relatively small quantity of bits in the MIB-MF may be occupied, so that the terminal can detect and demodulate the MF system information block. However, because the MIB-MF does not include DMTC period information, the terminal needs to detect the MF system information block in an enhanced DRS in each subframe, or detect the MF system information block in a DRS based on a minimum DMTC period configuration, and power consumption is relatively high.

In this embodiment of this application, to reduce the power consumption of the terminal, based on the implementation in which the MF system information block period information or the MF system information block content change indication information are included, an implementation in which the MIB-MF includes the DMTC configuration information in the foregoing embodiment may be used.

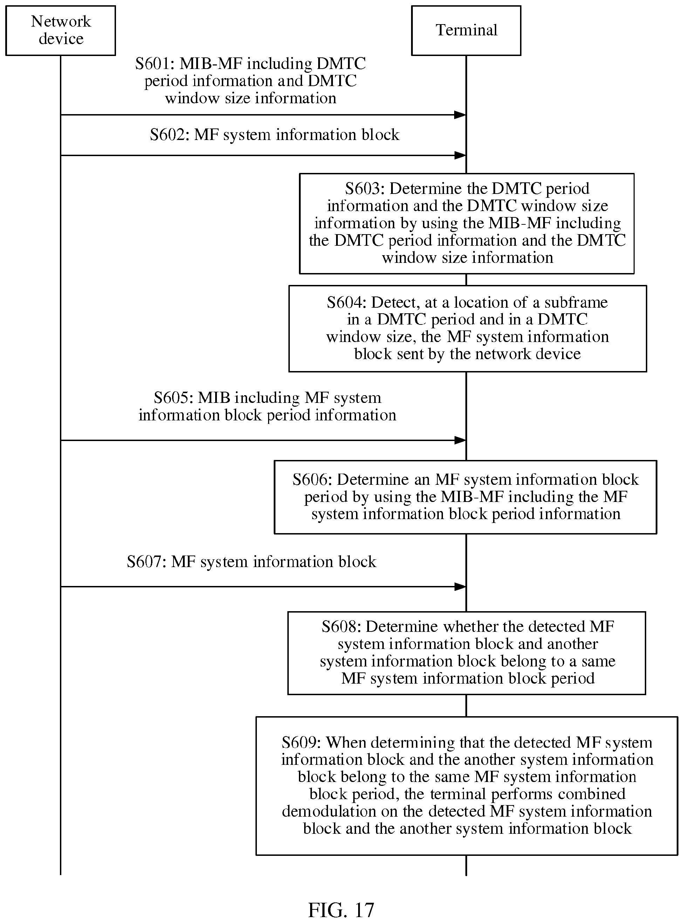

FIG. 17 is a flowchart of another implementation method for scheduling an MF system information block according to an embodiment of this application. Execution steps S601, S602, S603, and S604 in FIG. 17 may be the same as the execution steps S101, S102, S103, and S104 in FIG. 11, or may be the same as the execution steps S201, S202, S203, and S204 in FIG. 12. Details are not described herein again. In the embodiment of this application of FIG. 17, an example in which steps are the same as the execution steps S201, S202, S203, and S204 in FIG. 12 is used for description.

The execution steps S605, S606, S607, S608, and S609 in FIG. 17 may be the same as the execution steps S401, S402, S403, S404, and S405 in FIG. 15, or may be the same as the execution steps S501, S502, S503, S504, and S505 in FIG. 16. Details are not described herein again. In the embodiment of this application of FIG. 17, an example in which steps are the same as the execution steps S401, S402, S403, S404, and S405 in FIG. 15 is used for description.

In this embodiment of this application, a signaling configuration in which the MIB-MF includes the DMTC configuration information and the MF system information block may use the following manner:

```
MasterInformationBlock-MF ::= SEQUENCE {
   dl-Bandwidth-mf ENUMERATED {
      n50, n100, spare1, spare2, spare3, spare4, spare5, spare6
                        },
   systemFrameNumber-mf BIT STRING (SIZE (8)),
    sf-Offset-mf INTEGER (0..4),
   DMTC-mf BIT STRING (SIZE (5))
   SIB-MF1-Periodicity-mf ENUMERATED {2, 4, 8, spare},
      spare BIT STRING (SIZE (3))
   }
```

In the foregoing signaling configuration, DMTC-mf represents the DMTC configuration information, including DMTC period information and DMTC window size information, and five bits are used for joint coding. DMTC-mf may alternatively occupy six bits to independently code the DMTC period information and the DMTC window size information. The DMTC period information occupies two bits and the DMTC window size information occupies four bits. Alternatively, the DMTC-mf may include only the DMTC period information, and occupy two bits. SIB-MF1-Periodicity-mf represents MF system information block period information.

In this embodiment of this application, when an MIB-MF and an MF system information block are sent in the foregoing signaling configuration manner, when detecting the MF system information block, the terminal may obtain a downlink synchronization signal and a PCI by using a first enhanced DRS, and demodulate an MF-PBCH to obtain a system bandwidth, a radio frame number, a subframe number, a DMTC configuration, and an MF system information block period configuration. If the terminal fails to correctly demodulate the MF system information block by using the first enhanced DRS, the terminal buffers data of the MF system information block; detects a DRS in a next DMTC time window; and if the DRS is detected, demodulates the MF system information block, or if the demodulation still fails, the terminal may perform combined demodulation on the MF system information block and the buffered MF system information block of the first enhanced DRS. If the two enhanced DRSs are not in one MF system information block period, the buffered MF system information block is discarded, and an enhanced DRS is continuously detected in the next DMTC window, and combined demodulation is performed on data of MF system information blocks in the MF system information block period.

In this embodiment of this application, the network device can determine the MF system information block change information by using the MF system information block period, to determine, based on the MF system information block period, whether to perform combined demodulation, so that a combination error is avoided, and the MF system information block can be demodulated more quickly.

In this embodiment of this application, a signaling configuration in which the MIB-MF includes the DMTC configuration information and the MF system information block content change indication information may use the following manner:

```
MasterInformationBlock-MF ::= SEQUENCE {
   dl-Bandwidth-mf ENUMERATED {
      n50, n100, spare1, spare2, spare3, spare4, spare5, spare6
                        },
   systemFrameNumber-mf BIT STRING (SIZE (8)),
    sf-Offset-mf INTEGER (0..4),
   DMTC-mf BIT STRING (SIZE (5))
   SIB-MF1-ChangeInd-mf ENUMERATED {0,1},
      spare BIT STRING (SIZE (4))
```

}

In the foregoing signaling configuration, DMTC-mf represents the DMTC configuration information, including DMTC period information and DMTC window size information, and five bits are used for joint coding. DMTC-mf may alternatively occupy six bits to independently code the DMTC period information and the DMTC window size information. The DMTC period information occupies two bits and the DMTC window size information occupies four bits. Alternatively, the DMTC-mf may include only the DMTC period information, and occupy two bits. SIB-MF1-ChangeInd-mf represents MF system information block content change indication information.

In this embodiment of this application, when an MIB-MF and an MF system information block are sent in the foregoing signaling configuration manner, when detecting the MF system information block, each time the terminal detects an enhanced DRS, the terminal demodulates an MF-PBCH, and determines, based on SIB-MF1-ChangeInd-mf, whether combined demodulation can be performed on the MF system information block. If SIB-MF1-ChangeInd-mf is 1, it indicates that content of this MF system information block is different from that of an MF system information block detected last time, and the terminal cannot perform combined demodulation; or if SIB-MF1-ChangeInd-mf is 0, it indicates that content of this MF system information block is the same as that of an MF system information block detected last time, and the terminal may perform combined demodulation.

In this embodiment of this application, a configuration manner in which the MF system information block content change indication information is used occupies fewer bits, compared with the configuration manner in which the MF system information block period information is used.

In the foregoing embodiment of this application, an MIB-MF includes at least a DMTC period, and may also include DMTC window size information, so that the terminal can obtain a DMTC configuration before demodulating an MF system information block. Therefore, the terminal only needs to detect an MF system information block in an enhanced DRS at a possible sending location of the enhanced DRS, thereby reducing power consumption of the terminal.

In the foregoing embodiment of this application, the MIB-MF includes MF system information block period information or an MF system information block content change indication, so that the terminal can determine whether content of detected MF system information blocks is changed, and perform combined demodulation on the MF system information blocks when determining that the content of the detected MF system information blocks is not changed, to avoid a combined demodulation error of the terminal to some extent, and improve a success rate of demodulating the MF system information block by the terminal.

It should be noted that, in this embodiment of this application, if scheduling information of the MF system information block, for example, information such as a TBS, an MCS, and resource allocation, is also carried in the MIB-MF, and/or if the enhanced DRS can also be delivered at a location of a subframe 0 in addition to a DMTC window, the scheme for scheduling an MF system information block may also be applicable.

If the enhanced DRS is delivered also at the location of the subframe 0 in addition to the DMTC time window, the terminal also needs to detect MF system information blocks in the enhanced DRS at the location of the subframe 0 in addition to the DMTC time window, to perform separate demodulation or combined demodulation on the MF system information block.

If the scheduling information of the MF system information block is also carried in the MIB-MF, after obtaining the scheduling information of the MF system information block from the MIB-MF, the terminal may determine existence of the MF system information block through CRS detection. If DMTC information is not configured in the MIB-MF, the terminal needs to perform CRS detection in each subframe, and demodulate a PDSCH after detection succeeds. However, at a location of a subframe 5, CRS detection by the terminal may succeed, but no MF system information block is delivered in the subframe 5. In this case, the terminal may have an error in both demodulation and combination.

It should be noted that, in the embodiments of this application, description of execution steps in the foregoing methods and execution steps shown in the accompanying drawings do not limit a specific execution sequence. For example, a sequence of sending an MIB-MF and an MF system information block by the network device is not limited in the embodiments of this application. The MIB-MF may be first sent, and then the MF system information block is sent, or the MF system information block and the MIB-MF may be sent together.

The foregoing mainly describes the solutions provided in the embodiments of this application from a perspective of interaction between the terminal and the network device. It may be understood that to implement the foregoing functions, the terminal and the network device include corresponding hardware structures and/or software modules for performing the functions. In combination with the examples of units (devices and components) and algorithm steps described in the embodiments disclosed in this application, the embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the technical solutions in the embodiments of this application.

In the embodiments of this application, functional unit (device or component) division may be performed on the terminal and the network device based on the foregoing method examples. For example, each functional unit (device or component) may be divided corresponding to each function, or two or more functions may be integrated into one processing unit (device or component). The integrated unit (device or component) may be implemented in a form of hardware, or may be implemented in a form of a software functional unit (device or component). It should be noted that the unit (device or component) division in the embodiments of this application is an example, and is merely logical function division. There may be another division manner in actual implementation.

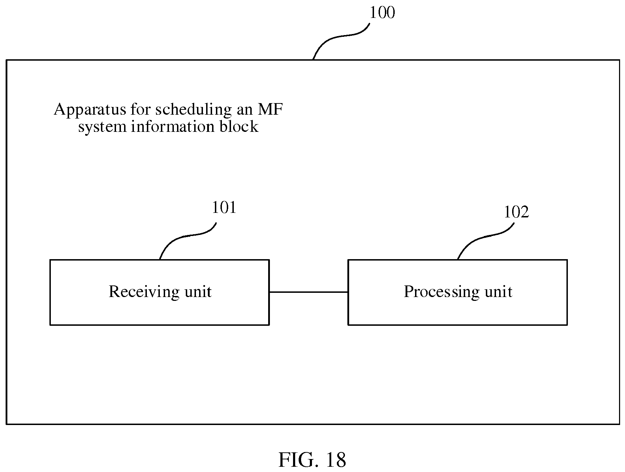

When an integrated unit (device or component) is used, FIG. 18 is a schematic structural diagram of an apparatus 100 for scheduling an MF system information block according to an embodiment of this application. The apparatus 100 for scheduling an MF system information block may be applied to a terminal. As shown in FIG. 18, the apparatus for scheduling an MF system information block includes a receiving unit 101 and a processing unit 102. The receiving unit 101 is configured to receive a master information block sent by a network device, where the master information block includes discovery signals measurement timing configuration DMTC period information; and the processing unit 102 is configured to: determine a DMTC period by using the master information block that is received by the receiving unit 101 and that includes the DMTC period information, and detect, at a location of a subframe in the DMTC period, an MF system information block sent by the network device.

In a possible implementation, the master information block further includes DMTC window size information; and the processing unit 102 is further configured to determine a DMTC window size by using the master information block including DMTC window size information. The processing unit 102 detects, at a location of a subframe in the DMTC period and in the DMTC window size, the MF system information block sent by the network device.

In another possible implementation, the processing unit 102 is further configured to: after detecting the MF system information block sent by the network device, perform combined demodulation on the detected MF system information block and another system information block, where the another MF system information block is an MF system information block that is in received system information blocks and whose content is consistent with that of the detected MF system information block, before the terminal receives the detected MF system information block.

In still another possible implementation, the master information block further includes MF system information block period information; and the processing unit 102 is further configured to: before performing combined demodulation on the detected MF system information block and the another system information block, determine an MF system information block period by using the master system information block including the MF system information block period information; and determine, based on the MF system information block period, that the detected MF system information block and the another system information block belong to a same MF system information block period, where content of MF system information blocks in a same MF system information block period is consistent.

In still another possible implementation, the master information block further includes MF system information block content change indication information; and the MF system information block content change indication information is used to indicate whether content of an MF system information block currently sent by the network device is consistent with that of the MF system information block already sent by the network device. The processing unit 102 is further configured to: before performing combined demodulation on the detected MF system information block and the another system information block, determine the MF system information block content change indication information by using the master system information block including the MF system information block content change indication information; and determine, based on the MF system information block content change indication information, whether the content of the detected MF system information block is consistent with that of the another system information block.

When implemented in a hardware form, in this embodiment of this application, the receiving unit 101 may be a communications interface, a receiver, a receiver circuit, or the like. The processing unit 102 may be a processor or a controller. The communications interface is a collective term, and may include one or more interfaces.

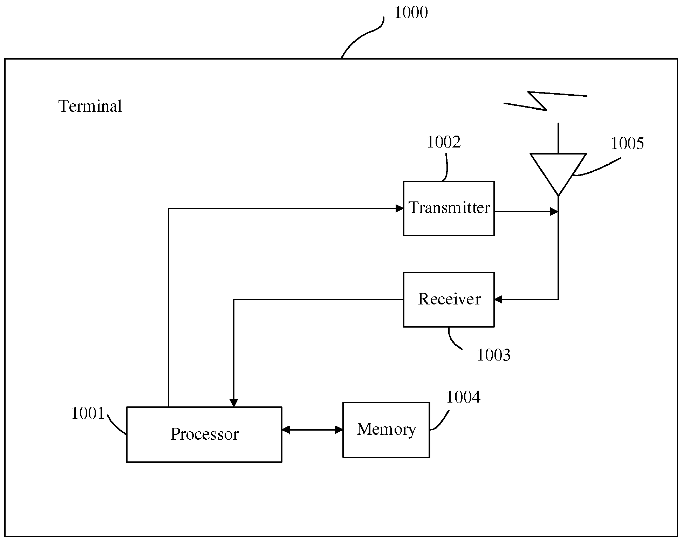

When the receiving unit 101 is a receiver and the processing unit 102 is a processor, the apparatus 100 for scheduling an MF system information block in this embodiment of this application may be an apparatus for scheduling an MF system information block shown in FIG. 19, and the apparatus for scheduling an MF system information block shown in FIG. 19 may be a terminal.

FIG. 19 is schematic structural diagram of a terminal 1000 according to an embodiment of this application, that is, FIG. 19 is another possible schematic structural diagram of an apparatus 100 for scheduling an MF system information block. As shown in FIG. 19, the terminal 1000 includes a processor 1001, a transmitter 1002, and a receiver 1003. The processor 1001 may alternatively be a controller. The processor 1001 is configured to support the terminal in performing the functions of the terminal in FIG. 11 to FIG. 13 and FIG. 15 to FIG. 17. The transmitter 1002 and the receiver 1003 are configured to support a message sending and receiving function between the terminal 1000 and the network device. The terminal 1000 may further include a memory 1004. The memory 1004 is configured to be coupled to the processor 1001, and the memory 1004 stores a program instruction and data that are necessary for the terminal 1000. The processor 1001, the transmitter 1002, the receiver 1003, and the memory 1004 are connected. The memory 1004 is configured to store an instruction. The processor 1001 is configured to execute the instruction stored in the memory 1004, to control the transmitter 1002 and the receiver 1003 to receive and send a signal, and implement the steps of performing corresponding functions by the terminal in the foregoing methods.

Further, the terminal 1000 may further include an antenna 1005.

In this embodiment of this application, for concepts, explanation, detailed description, and other steps that are related to the technical solutions provided in this embodiment of this application and that are used in the apparatus 100 for scheduling an MF system information and the terminal 1000, refer to the description of the content in the foregoing methods or other embodiments. Details are not described herein again.

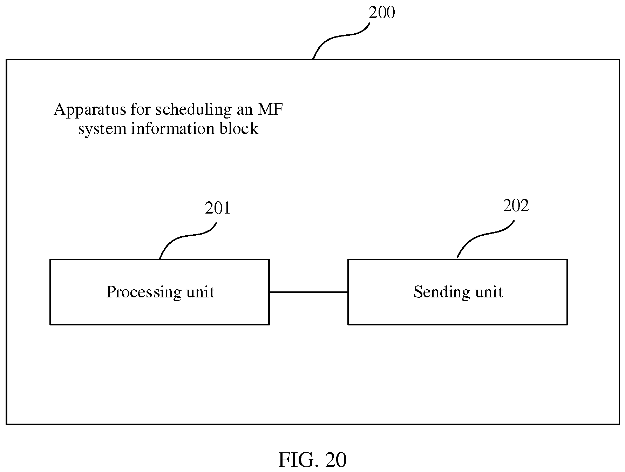

When an integrated unit (component or device) is used, FIG. 20 is a schematic structural diagram of another apparatus for scheduling an MF system information block according to an embodiment of this application. The apparatus 200 for scheduling an MF system information block shown in FIG. 20 may be applied to a network device. As shown in FIG. 20, the apparatus 200 for scheduling an MF system information block may include a processing unit 201 and a sending unit 202. The sending unit 202 is configured to send an MF system information block and a master information block under control of the processing unit 201.

In a possible implementation, the master information block includes DMTC period information; and the sending unit 202 sends, under control of the processing unit 201, the MF system information block and the master information block including the DMTC period information.

In another possible implementation, the master information block includes DMTC period information and DMTC window size information. The sending unit 202 sends, under control of the processing unit 201, the MF system information block and the master information block including the DMTC period information and the DMTC window size information.

In still another possible implementation, the master information block includes MF system information block period information or MF system information block content change indication information, where content of MF system information blocks in a same MF system information block period is consistent; and the MF system information block content change indication information is used to indicate whether content of an MF system information block currently sent by the network device is consistent with that of the MF system information block already sent by the network device. The sending unit 202 sends, to the terminal under control of the processing unit 201, the MF system information block and the master information block including the MF system information block period information or the MF system information block content change indication information.

In still another possible implementation, the master information block includes DMTC period information and MF system information block period information. The sending unit 202 sends, to the terminal under control of the processing unit 201, the MF system information block and the master information block including the DMTC period information and the MF system information block period information.

In still another possible implementation, the master information block includes DMTC period information and MF system information block content change indication information. The sending unit 202 sends, to the terminal under control of the processing unit 201, the MF system information block and the master information block including the DMTC period information and the MF system information block content change indication information.

In still another possible implementation, the master information block includes DMTC period information, DMTC window size information, and MF system information block period information. The sending unit 202 sends, to the terminal under control of the processing unit 201, the MF system information block and the master information block including the DMTC period information, the DMTC window size information, and the MF system information block period information.

In still another possible implementation, the master information block includes DMTC period information, DMTC window size information, and MF system information block content change indication information. The sending unit 202 sends, to the terminal under control of the processing unit 201, the MF system information block and the master information block including the DMTC period information, the DMTC window size information, and the MF system information block content change indication information.

When implemented in a hardware form, in this embodiment of this application, the processing unit 201 may be a processor or a controller. The sending unit 202 may be a communications interface, a transceiver, a transceiver circuit, or the like. The communications interface is a collective term, and may include one or more interfaces.

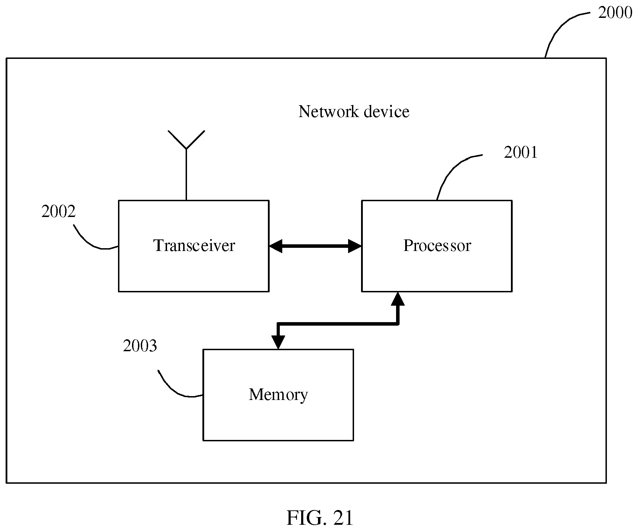

When the processing unit 201 is a processor and the sending unit 202 is a transceiver, the apparatus 200 for scheduling an MF system information block in this embodiment of this application may be an apparatus for scheduling an MF system information block shown in FIG. 21, and the apparatus for scheduling an MF system information block shown in FIG. 20 may be a network device, for example, a base station.

FIG. 21 is schematic structural diagram of a network device 2000 according to an embodiment of this application, that is, FIG. 21 is another schematic structural diagram of an apparatus 200 for scheduling an MF system information block. As shown in FIG. 21, the network device 2000 includes a processor 2001 and a transceiver 2002. The processor 2001 may alternatively be a controller. The processor 2001 is configured to support the network device in performing the functions in FIG. 11 to FIG. 13 and FIG. 15 to FIG. 17. The transceiver 2002 is configured to support a function of receiving and sending a message by the network device. The network device may further include a memory 2003. The memory 2003 is configured to be coupled to the processor 2001, and the memory 2003 stores a program instruction and data that are necessary for the network device. The processor 2001, the transceiver 2002, and the memory 2003 are connected. The memory 2003 is configured to store an instruction. The processor 2001 is configured to execute the instruction stored in the memory 2003, to control the transceiver 2002 to receive and send a signal, and implement the steps that are performed by the network device for corresponding functions in the foregoing methods.

In this embodiment of this application, for concepts, explanation, detailed description, and other steps that are related to the technical solutions provided in this embodiment of this application and that are used in the apparatus 200 for scheduling an MF system information block and the network device 2000, refer to the description of the content in the foregoing methods or other embodiments. Details are not described herein again.

It may be understood that the accompanying drawings of the embodiments of this application show only simplified designs of the terminal and the network device. In an actual application, the terminal and the network device are not limited to the foregoing structures. For example, an antenna array, a duplexer, and a baseband processing part may be further included.

The duplexer of the network device is configured to implement an antenna array, and is configured to send a signal and receive a signal. The transmitter is configured to implement conversion between a radio frequency signal and a baseband signal. The transmitter may usually include a power amplifier, a digital-to-analog converter, and a frequency converter, and the receiver may usually include a low noise amplifier, an analog-to-digital converter, and a frequency converter. The receiver and the transmitter may be collectively referred to as a transceiver sometimes. The baseband processing part is configured to: process a sent or received signal, for example, perform layer mapping, precoding, modulation/demodulation, and encoding/decoding, and separately process a physical control channel, a physical data channel, a physical broadcast channel, a reference signal, and the like. For another example, the terminal may further include a display device, an input/output interface, and the like.

The terminal may have a single antenna, or a plurality of antennas (that is, an antenna array). The duplexer of the terminal is configured to enable the antenna array to send and receive a signal. The transmitter is configured to implement conversion between a radio frequency signal and a baseband signal. The transmitter may usually include a power amplifier, a digital-to-analog converter, and a frequency converter, and the receiver may usually include a low noise amplifier, an analog-to-digital converter, and a frequency converter. The baseband processing part is configured to: process a sent or received signal, for example, perform layer mapping, precoding, modulation/demodulation, and encoding/decoding, and separately process a physical control channel, a physical data channel, a physical broadcast channel, a reference signal, and the like. In an example, the terminal may also include a control part, configured to request an uplink physical resource, calculate channel state information (Channel State Information, CSI) corresponding to a downlink channel, determine whether a downlink data packet is successfully received, and the like.

It should be noted that the foregoing related processor in the embodiments of this application may be a central processing unit (Central Processing Unit, CPU), a general-purpose processor, a digital signal processor (Digital Signal Processing, DSP), an application-specific integrated circuit (Application Specific Integrated Circuit, ASIC), a field programmable gate array (Field-Programmable Gate Array, FPGA) or another programmable logical device, a transistor logical device, a hardware component, or a combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor, and or the like.

The memory may be integrated into the processor, or may be separately disposed with the processor.

In an implementation, it is considered that functions of the receiver and the transmitter may be implemented by using a transceiver circuit or a dedicated transceiver chip. It may be considered that the processor may be implemented by using a dedicated processing chip, a processing circuit, a processor, or a general-purpose chip.

In another implementation, program code that is used to implement functions of the processor, the receiver, and the transmitter is stored in the memory. A general-purpose processor implements the functions of the processor, the receiver, and the transmitter by executing the code in the memory.

According to the methods provided in the embodiments of this application, an embodiment of this application further provides a communications system, including the foregoing network device and one or more terminals.

An embodiment of this application further provides a computer storage medium, configured to store some instructions. When the instructions are executed, any method related to the foregoing terminal or network device can be completed.

An embodiment of this application further provides a computer program product, configured to store a computer program. The computer program is used to perform the method for scheduling an MF system information block in the foregoing method embodiments.

A person skilled in the art should understand that the embodiments of this application may be provided as a method, a system, or a computer program product. Therefore, the embodiments of this application may use a form of hardware only embodiments, software only embodiments, or embodiments with a combination of software and hardware.

Moreover, the embodiments of this application may use a form of a computer program product that is implemented in one or more computer-usable storage media (including but not limited to a disk memory, a CD-ROM, an optical memory, and the like) that include computer-usable program code.

The embodiments of this application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A method for scheduling a system information block, comprising:

   receiving, by a terminal, a master information block sent by a network device, wherein the master information block comprises discovery signals measurement timing configuration DMTC period information;
   determining, by the terminal, a DMTC period by using the master information block; and
   detecting, by the terminal at a location of a subframe in the DMTC period, a system information block sent by the network device.

2. The method according to claim 1, wherein the master information block further comprises DMTC window size information;
   the method further comprises: determining, by the terminal, a DMTC window size by using the master information block; and
   the detecting, by the terminal at a location of a subframe in the DMTC period, the system information block sent by the network device comprises:
   detecting, by the terminal at a location of a subframe in the DMTC period and in the DMTC window size, the system information block sent by the network device.

3. The method according to either of claims 1 and 2, wherein after the terminal detects the system information block sent by the network device, the method further comprises:

   performing, by the terminal, combined demodulation on the detected system information block and another system information block, wherein
   the another system information block is a system information block that is in received system information blocks and whose content is consistent with that of the detected system information block, before the terminal receives the detected system information block.

4. The method according to claim 3, wherein the master information block further comprises system information block period information; and
   before the performing, by the terminal, combined demodulation on the detected system information block and another system information block, the method further comprises:

   determining, by the terminal, a system information block period by using the master system information block, and

determining, by the terminal based on the system information block period, that the detected system information block and the another system information block belong to a same system information block period, wherein content of system information blocks in a same system information block period is consistent.

5. The method according to claim 3, wherein the master information block further comprises system information block content change indication information; and the system information block content change indication information is used to indicate whether content of the system information block currently sent by the network device is consistent with that of the system information block already sent by the network device; and
before the performing, by the terminal, combined demodulation on the detected system information block and another system information block, the method further comprises:

determining, by the terminal, the system information block content change indication information by using the master system information block; and
determining, by the terminal according to the system information block content change indication information, that the content of the detected system information block is consistent with that of the another system information block.

6. A method for scheduling a system information block, comprising:

receiving, by a terminal, a master information block sent by a network device, wherein the master information block comprises system information block period information; and
determining, by the terminal, a system information block period by using the master system information block, wherein
content of system information blocks in a same system information block period is consistent; or
receiving, by a terminal, a master information block sent by a network device, wherein the master information block comprises system information block content change indication information; and
determining, by the terminal, the system information block content change indication information by using the master system information block, wherein
the system information block content change indication information is used to indicate whether content of the system information block currently sent by the network device is consistent with that of a system information block already sent by the network device.

7. The method according to claim 6, wherein the method further comprises:

detecting, by the terminal, the system information block sent by the network device;
determining, by the terminal based on the system information block period, that the detected system information block and another system information block belong to a same system information block period; or determining, by the terminal according to the system information block content change indication information, that the content of the detected system information block is consistent with that of the another system information block, wherein the another system information block is a system information block that is in received system information blocks and whose content is consistent with that of the detected system information block, before the terminal receives the detected system information block; and
performing, by the terminal, combined demodulation on the detected system information block and the another system information block.

8. A method for scheduling a system information block, comprising:

sending, by a network device, a master information block to a terminal, wherein the master information block comprises discovery signals measurement timing configuration DMTC period information; and
sending, by the network device, a system information block to the terminal.

9. The method according to claim 8, wherein the master information block further comprises DMTC window size information.

10. The method according to either of claims 8 and 9, wherein the master information block further comprises system information block period information or system information block content change indication information;
content of system information blocks in a same system information block period is consistent; and
the system information block content change indication information is used to indicate whether content of the system information block currently sent by the network device is consistent with that of the system information block already sent by the network device.

11. A method for scheduling a system information block, comprising:

sending, by a network device, a master information block to a terminal, wherein the master information block comprises system information block period information or system information block content change indication information; and

sending, by the network device, a system information block to the terminal, wherein

content of system information blocks in a same system information block period is consistent; and

the system information block content change indication information is used to indicate whether content of the system information block currently sent by the network device is consistent with that of the system information block already sent by the network device.

12. An apparatus for scheduling a system information block, comprising:

a receiving unit, configured to receive a master information block sent by a network device, wherein the master information block comprises discovery signals measurement timing configuration DMTC period information; and

a processing unit, configured to: determine a DMTC period by using the master information block received by the receiving unit, and detect, at a location of a subframe in the DMTC period, a system information block sent by the network device.

13. The apparatus according to claim 12, wherein the master information block further comprises DMTC window size information;

the processing unit is further configured to determine a DMTC window size by using the master information block; and

the processing unit detects, at the location of the subframe in the DMTC period in the following manner, the system information block sent by the network device:

detecting, at a location of a subframe in the DMTC period and in the DMTC window size, the system information block sent by the network device.

14. The apparatus according to either of claims 12 and 13, wherein the processing unit is further configured to:

after detecting the system information block sent by the network device, perform combined demodulation on the detected system information block and another system information block, wherein

the another system information block is a system information block that is in received system information blocks and whose content is consistent with that of the detected system information block, before the terminal receives the detected system information block.

15. The apparatus according to claim 14, wherein the master information block further comprises system information block period information; and

the processing unit is further configured to:

before performing combined demodulation on the detected system information block and the another system information block, determine a system information block period by using the master system information block; and

determine, based on the system information block period, that the detected system information block and the another system information block belong to a same system information block period; and

content of system information blocks in a same system information block period is consistent.

16. The apparatus according to claim 14, wherein the master information block further comprises system information block content change indication information; the system information block content change indication information is used to indicate whether content of the system information block currently sent by the network device is consistent with that of the system information block already sent by the network device; and

the processing unit is further configured to:

before performing combined demodulation on the detected system information block and the another system information block, determine the system information block content change indication information by using the master system information block; and

determine, based on the system information block content change indication information, whether the content of the detected system information block is consistent with that of the another system information block.

17. An apparatus for scheduling a system information block, comprising:

a receiving unit, configured to receive a master information block sent by a network device, wherein the master information block comprises system information block period information or system information block content change indication information; and
a processing unit, configured to determine a system information block period by using the master system information block that is received by the receiving unit and that comprises the system information block period information; or configured to determine the system information block content change indication information by using the master system information block that is received by the receiving unit and that comprises the system information block content change indication information, wherein
content of system information blocks in a same system information block period is consistent; and
the system information block content change indication information is used to indicate whether content of the system information block currently sent by the network device is consistent with that of the system information block already sent by the network device.

18. The apparatus according to claim 17, wherein the processing unit is further configured to:

detect the system information block sent by the network device, and determine, based on the system information block period, that the detected system information block and another system information block belong to a same system information block period; or determine, based on the system information block content change indication information, whether the content of the detected system information block is consistent with that of another system information block, and perform combined demodulation on the detected system information block and the another system information block, wherein
the another system information block is a system information block that is in received system information blocks and whose content is consistent with that of the detected system information block, before the terminal receives the detected system information block.

19. An apparatus for scheduling a system information block, comprising a processing unit and a sending unit, wherein the sending unit is configured to send a master information block and a system information block under control of the processing unit, wherein the master information block comprises discovery signals measurement timing configuration DMTC period information.

20. The apparatus according to claim 19, wherein the master information block further comprises DMTC window size information.

21. The apparatus according to either of claims 19 and 20, wherein the master information block further comprises system information block period information or system information block content change indication information;
content of system information blocks in a same system information block period is consistent; and
the system information block content change indication information is used to indicate whether content of the system information block currently sent by the network device is consistent with that of the system information block already sent by the network device.

22. An apparatus for scheduling a system information block, comprising a processing unit and a sending unit, wherein the sending unit sends a master information block and a system information block to a terminal under control of the processing unit, wherein the master information block comprises system information block period information or system information block content change indication information;
content of system information blocks in a same system information block period is consistent; and
the system information block content change indication information is used to indicate whether content of the system information block currently sent by the network device is consistent with that of the system information block already sent by the network device.

23. A computer-readable storage medium, wherein the computer-readable storage medium stores a computer program, and when the program is executed by a processor, the method according to any one of claims 1 to 11 is implemented.

FIG. 1

FIG. 2

Block

FIG. 3

FIG. 4

FIG. 5

| Subframe n | | | | | | | | | | | | | | Subframe n+1 | | | | | | | | | | | | | |
|---|---|---|---|---|---|---|---|---|---|---|---|---|---|---|---|---|---|---|---|---|---|---|---|---|---|---|---|
| #0 | #1 | #2 | #3 | #4 | #5 | #6 | #7 | #8 | #9 | #10 | #11 | #12 | #13 | #0 | #1 | #2 | #3 | #4 | #5 | #6 | #7 | #8 | #9 | #10 | #11 | #12 | #13 |

| PDCCH | DRS | MF-ePSS | MF-ePBCH | MF-eSSS | MF-ePBCH | MF-ePBCH |
|---|---|---|---|---|---|---|

Legend:

| PDCCH | MF-PBCH | MF-ePSS |
|---|---|---|
| MF-SSS | SSS | MF-eSSS |
| MF-PSS | PSS | MF-ePBCH |

FIG. 6

| Subframe n | | | | | | | | | | | | | | Subframe n+1 | | | | | | | | | | | | | |
|---|---|---|---|---|---|---|---|---|---|---|---|---|---|---|---|---|---|---|---|---|---|---|---|---|---|---|---|
| #0 | #1 | #2 | #3 | #4 | #5 | #6 | #7 | #8 | #9 | #10 | #11 | #12 | #13 | #0 | #1 | #2 | #3 | #4 | #5 | #6 | #7 | #8 | #9 | #10 | #11 | #12 | #13 |

| PDCCH | DRS | MF-eSSS | MF-ePSS | MF-ePBCH | MF-ePBCH |
|---|---|---|---|---|---|

Legend:

| | | | | | |
|---|---|---|---|---|---|
| ▨ | PDCCH | ▥ | MF-PBCH | ░ | MF-ePSS |
| ▦ | MF-SSS | ▒ | SSS | ░ | MF-eSSS |
| ▦ | MF-PSS | ▨ | PSS | ▤ | MF-ePBCH |

FIG. 7

| Subframe n | | | | | | | | | | | | | | Subframe n+1 | | | | | | | | | | | | | |
|---|---|---|---|---|---|---|---|---|---|---|---|---|---|---|---|---|---|---|---|---|---|---|---|---|---|---|---|
| #0 | #1 | #2 | #3 | #4 | #5 | #6 | #7 | #8 | #9 | #10 | #11 | #12 | #13 | #0 | #1 | #2 | #3 | #4 | #5 | #6 | #7 | #8 | #9 | #10 | #11 | #12 | #13 |

| PDCCH | DRS | MF-eSSS | MF-ePBCH | MF-ePSS | MF-ePBCH | MF-ePBCH |
|---|---|---|---|---|---|---|

Legend:

- PDCCH
- MF-SSS
- MF-PSS
- MF-PBCH
- SSS
- PSS
- MF-ePSS
- MF-eSSS
- MF-ePBCH

FIG. 8

FIG. 9

EP 3 614 731 A1

| Subframe n | | | | | | | | | | | | | | Subframe n+1 | | | | | | | | | | | | | |
|---|---|---|---|---|---|---|---|---|---|---|---|---|---|---|---|---|---|---|---|---|---|---|---|---|---|---|---|
| #0 | #1 | #2 | #3 | #4 | #5 | #6 | #7 | #8 | #9 | #10 | #11 | #12 | #13 | #0 | #1 | #2 | #3 | #4 | #5 | #6 | #7 | #8 | #9 | #10 | #11 | #12 | #13 |

| PDCCH | Synchronization signal | MF-ePBCH | PDCCH | MF-ePBCH | MF-ePBCH |
|---|---|---|---|---|---|

PDCCH

MF-ePBCH

MF-ePSS

MF-eSSS

FIG. 10

```
┌──────────────────┐                              ┌──────────────────┐
│  Network device  │                              │     Terminal     │
└──────────────────┘                              └──────────────────┘
         │                                                  │
         │  S101: MIB-MF including DMTC period              │
         │              information                         │
         │─────────────────────────────────────────────────>│
         │                                                  │
         │  S102: MF system information block               │
         │─────────────────────────────────────────────────>│
         │                                                  │
         │                        ┌─────────────────────────┴─────────┐
         │                        │ S103: Determine a DMTC period      │
         │                        │ by using the MIB-MF including the  │
         │                        │      DMTC period information       │
         │                        └─────────────────────────┬─────────┘
         │                                                  │
         │              ┌───────────────────────────────────┴──────────┐
         │              │ S104: Detect, at a location of a subframe in   │
         │              │ the DMTC period, the MF system information     │
         │              │ block sent by the network device              │
         │              └───────────────────────────────────┬──────────┘
         │                                                  │
```

FIG. 11

Network device

Terminal

S201: MIB-MF including DMTC period information and DMTC window size information

S202: MF system information block

S203: Determine a DMTC period and a DMTC window size by using the MIB-MF including the DMTC period information and the DMTC window size information

S204: Detect, at a location of a subframe in the DMTC period and in the DMTC window size, the MF system information block sent by the network device

FIG. 12

Network device

Terminal

S301: MIB-MF including MF system information block period information or MF system information block content change indication information

S302: Determine the MF system information block period information or the MF system information block content change indication information by using the MIB-MF

FIG. 13

SIB-MF1 period: 80 ms

DMTC period: 40 ms

DMTC window size          DMTC window size

SF #0  SF #0  SF #0  SF #0  SF #0  SF #0  SF #0  SF #0  SF #0

DRS                              DRS

FIG. 14

Network
device

Terminal

S401: MIB-MF including MF system
information block period information

S402: Determine an MF system
information block period by using the
MIB-MF including the MF system
information block period information

S403: MF system information block

S404: Determine whether a detected MF
system information block and another system
information block belong to a same MF
system information block period

S405: When determining that the detected MF
system information block and the another system
information block belong to the same MF system
information block period, the terminal performs
combined demodulation on the detected MF system
information block and the another system
information block

FIG. 15

```
┌──────────────┐                              ┌──────────────┐
│ Network      │                              │  Terminal    │
│ device       │                              │              │
└──────┬───────┘                              └──────┬───────┘
       │                                             │
       │  S501: MIB-MF including MF system           │
       │  information block content change indication│
       │             information                     │
       │────────────────────────────────────────────▶│
       │                                             │
       │              ┌──────────────────────────────────────────┐
       │              │ S502: Determine the MF system information │
       │              │ block content change indication information by│
       │              │        using the MIB-MF                   │
       │              └──────────────────────────────────────────┘
       │                                             │
       │  S503: MF system information block          │
       │────────────────────────────────────────────▶│
       │                                             │
       │          ┌──────────────────────────────────────────────┐
       │          │ S504: Determine, based on the MF system        │
       │          │ information block content change indication    │
       │          │ information, whether content of a detected MF  │
       │          │ system information block is consistent with that│
       │          │ of another system information block            │
       │          └──────────────────────────────────────────────┘
       │                                             │
       │        ┌────────────────────────────────────────────────┐
       │        │ S505: When determining that the content of the   │
       │        │ detected MF system information block is consistent│
       │        │ with that of the another system information block,│
       │        │ perform combined demodulation on the detected    │
       │        │ MF system information block and the another       │
       │        │        system information block                  │
       │        └────────────────────────────────────────────────┘
       │                                             │
```

FIG. 16

Network
device

Terminal

S601: MIB-MF including DMTC
period information and DMTC
window size information

S602: MF system information block

S603: Determine the DMTC period
information and the DMTC window size
information by using the MIB-MF including
the DMTC period information and the DMTC
window size information

S604: Detect, at a location of a subframe
in a DMTC period and in a DMTC
window size, the MF system information
block sent by the network device

S605: MIB including MF system
information block period information

S606: Determine an MF system information block
period by using the MIB-MF including the MF
system information block period information

S607: MF system information block

S608: Determine whether the detected MF
system information block and another
system information block belong to a same
MF system information block period

S609: When determining that the detected MF system
information block and the another system information
block belong to the same MF system information
block period, the terminal performs combined
demodulation on the detected MF system information
block and the another system information block

FIG. 17

100

Apparatus for scheduling an MF
system information block

101

Receiving unit

102

Processing unit

FIG. 18

1000

Terminal

1002

Transmitter

1005

Receiver

1003

1001

Processor ↔ Memory

1004

200

Apparatus for scheduling an MF
system information block

201

Processing unit

202

Sending unit

FIG. 20

2000

Network device

2001

2002

Transceiver ⟷ Processor

2003

Memory

FIG. 21

# INTERNATIONAL SEARCH REPORT

| International application No. |
| --- |
| PCT/CN2017/086679 |

## A. CLASSIFICATION OF SUBJECT MATTER

H04W 28/18 (2009.01) i

According to International Patent Classification (IPC) or to both national classification and IPC

## B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC: 系统信息块, 主信息块, 发现信号, 测量时间, 周期, 子帧, 窗口, 长度, 变更, 指示, MF, DRS, MIB, SIB, DMTC, measure, frame, Window, length, size, change, instruct+

## C. DOCUMENTS CONSIDERED TO BE RELEVANT

| Category* | Citation of document, with indication, where appropriate, of the relevant passages | Relevant to claim No. |
| --- | --- | --- |
| Y | CN 102056243 A (CHINA MOBILE COMMUNICATIONS CORPORATION), 11 May 2011 (11.05.2011), description, paragraphs [2] and [62] | 1-5, 8-10, 12-16, 19-21, 23 |
| Y | ERICSSON. "Intra-frequency RSRP measurement accuracy requirements with DMTC", 3GPP TSG - RAN WG 4 Meeting #73 r4-147478, 21 November 2014 (21.11.2014), section 9.1.13.1 | 1-5, 8-10, 12-16, 19-21, 23 |
| A | CN 102651890 A (CHINA ACADEMY OF TELECOMMUNICATIONS TECHNOLOGY), 29 August 2012 (29.08.2012), entire document | 1-23 |
| A | WO 2016053039 Al (KT CORPORATION), 07 April 2016 (07.04.2016), entire document | 1-23 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 February 2018 | 26 February 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer FANG, Ting Telephone No. (86-10) 62413316 |
| --- | --- |

Form PCT/ISA/210 (second sheet) (July 2009)

## INTERNATIONAL SEARCH REPORT
### Information on patent family members

| | International application No. |
|---|---|
| | PCT/CN2017/086679 |

| Patent Documents referred in the Report | Publication Date | Patent Family | Publication Date |
|---|---|---|---|
| CN 102056243 A | 11 May 2011 | None | |
| CN 102651890 A | 29 August 2012 | None | |
| WO 2016053039 A1 | 07 April 2016 | None | |

Form PCT/ISA/210 (patent family annex) (July 2009)